# EUROPEAN PATENT APPLICATION

(11) **EP 1 970 696 A2**
(43) Date of publication of application: **17.09.2008**
(21) Application number: 08152607.1
(22) Date of filing: 11.03.2008
(51) Int. Cl.: G01N 21/64

(54) **Ultraviolet irradiation apparatus, curing reaction detector used for the same and method for curing an ultraviolet curing resin using the curing reaction detector**

(30) Priority: 13.03.2007 JP 2007064021
(71) Applicant: Omron Corporation, Kyoto-shi, Kyoto 600-8530 (JP)
(72) Inventor: Senega, Tadashi, Kyoto-shi Kyoto 600-8530 (JP); Imai, Kiyoshi, Kyoto-shi Kyoto 600-8530 (JP)
(74) Representative: Skuhra, Udo

(57) **Abstract**

A measured fluorescence amount and a previously set threshold value α1 are compared and when the measured fluorescence amount exceeds the threshold value a1, a message such as "curing reaction completion" is issued. Note that when this "curing reaction completion" is issued, an irradiation end instruction is given to a light source part from a curing reaction detector, and irradiation of a curing ultraviolet ray is stopped. Along with the stop of the curing ultraviolet ray, the irradiation of an exciting ultraviolet ray is also stopped.

## Description

### BACKGROUND OF THE INVENTION

### 1. Field of the Invention

The present invention relates to an ultraviolet irradiation apparatus for curing an ultraviolet curing resin, a curing reaction detector used for the same and a method for curing the ultraviolet curing resin using the curing reaction detector, and particularly relates to a technique of deciding a curing reaction state of the ultraviolet curing resin in real time.

### 2. Description of the Related Art

In recent years, ultraviolet curing is used in a plurality of industry fields, as a curing method for adhesive agents and coating agents. The ultraviolet curing method has a plurality of advantages such as not diffusing harmful substances into the atmosphere, shortening the curing time, and making it possible to be adapted to a product which is not resistant to heat, compared to a heat curing method using heat energy.

In the ultraviolet curing method, an ultraviolet curing resin is used, which is mainly a liquid before the irradiation of the ultraviolet rays, and meanwhile which is changed to a solid after the irradiation of the ultraviolet rays. Such an ultraviolet curing resin contains a primary agent composed of at least one of a monomer and an oligomer, and further contains a photopolymerization initiator. The photopolymerization initiator receives irradiated ultraviolet rays to generate radicals or cations, and the generated radicals or cations undergo a polymerizing reaction with the monomer and oligomer. Along with this polymerizing reaction, the monomer and oligomer are polymerized, having a very large molecular weight and an increased melting point. As a result, the ultraviolet curing resin cannot maintain a liquid state, thus being solidified.

Meanwhile, it is difficult to visually determine curing degrees and existence/non-existence of quality abnormality of the ultraviolet curing resin, and a method of easily determining a curing reaction state of the ultraviolet curing resin is desired. Therefore, Japanese Patent Publication No. 2651036 discloses a method of monitoring the curing degree of a curable coating material. This method includes the step of measuring light emission of a probe in order to measure the curing degrees of an ultraviolet ray curable material with respect to a material system including the ultraviolet curable material and a fluorescence component that emits light so as to change as a function of the curing degrees of a curable material.

However, as is disclosed in the above-described Japanese Patent Publication No. 2651036, in many cases, it is difficult to apply the method of adding a probe that emits light such that it changes as a function of the curing degrees of the curable material, to a general-purpose ultraviolet curing method. Namely, it is disadvantageous to add a special material such as a probe as described above in terms of cost, and in many cases, it is not permissible to add the probe from the viewpoint of a quality.

Therefore, in order to solve the above-described problem, the present invention is provided and an object of the present invention is to provide an ultraviolet irradiation apparatus capable of determining a curing reaction state of a general-purpose ultraviolet curing resin in real time, a curing reaction detector used for the same, and a curing method of the ultraviolet curing resin using the curing reaction detector.

### SUMMARY OF THE INVENTION

In accordance with ultraviolet irradiation onto an ultraviolet curing resin, the inventors of the present invention have found that a photopolymerization initiator itself included in the ultraviolet curing resin emits an observable fluorescence correlated to a state (such as curing degrees) of the ultraviolet curing resin, and a state estimation method of the ultraviolet curing resin using this fact is filed as Japanese Patent Application No.2006-071580. An object of the present invention is to solve the above-described problem by using the observable fluorescence correlated to the state of the ultraviolet curing resin.

One of the aspects of the present invention provides an ultraviolet irradiation apparatus for curing an ultraviolet curing resin containing a primary agent composed of at least one of monomer and oligomer, and further containing a photopolymerization initiator. This ultraviolet irradiation apparatus includes a light source device that irradiates a first ultraviolet ray for promoting a curing reaction of the ultraviolet resin, and a curing reaction detector. Then, the curing reaction detector includes an irradiation part that irradiates a second ultraviolet ray for activating the ultraviolet curing resin; a measurement part that receives the second ultraviolet ray irradiated by the irradiation part to measure a fluorescence amount emitted from the photopolymerization initiator; and a determination part that determines a curing reaction state of the ultraviolet curing resin based on a time series behavior of the fluorescence amount measured by the measurement part.

According to the ultraviolet irradiation apparatus of this aspect, the curing reaction of the ultraviolet curing resin is promoted under irradiation of the first ultraviolet ray, and the fluorescence amount emitted from the photopolymerization initiator of the ultraviolet curing resin is measured under irradiation of the second ultraviolet ray. This fluorescence amount has a correlation with the curing reaction state of the ultraviolet curing resin, and therefore based on the time series behavior of this fluorescence amount, the curing reaction state can be determined in real time.

Preferably, the curing reaction detector is constituted to start the irradiation of the second ultraviolet ray and measure the fluorescence amount when the irradiation of the first ultraviolet ray from the light source device is started, and when the irradiation of the first ultraviolet ray from the light source device is ended, end the irradiation of the second ultraviolet ray and the measurement of the fluorescence amount.

Preferably, the determination part gives an instruction to end the irradiation of the first ultraviolet ray to the light source device, when a measured fluorescence amount exceeds a prescribed threshold value.

Preferably, the determination part gives an instruction to end the irradiation of the first ultraviolet ray to the light source device, when a variation amount of the measured fluorescence amount per unit time is below the prescribed threshold value.

Preferably, the light source device irradiates the first ultraviolet ray, which has an intensity that is approximately constant over time; the irradiation part irradiates the second ultraviolet ray, which has a periodically changing intensity; and the measurement part extracts from the measured fluorescence amount the fluorescence amount emitted from the photopolymerization initiator based on a periodic component corresponding to an intensity variation period of the second ultraviolet ray irradiated by the irradiation part.

Another aspect of the present invention provides a curing reaction detector that detects a curing reaction that occurs when the ultraviolet curing resin containing a primary agent composed of at lease either one of the monomer and oligomer and containing the photopolymerization initiator, receives the first ultraviolet ray. This curing reaction detector includes an irradiation part that irradiates the second ultraviolet ray for activating the ultraviolet curing resin; a measurement part that measures the fluorescence amount emitted from the photopolymerization initiator after receiving the second ultraviolet ray irradiated by the irradiation part; and a determination part that determines the curing reaction state of the ultraviolet curing resin based on the time-series behavior of the fluorescence amount measured by the measurement part.

According to the curing reaction detector of this aspect, when the ultraviolet curing resin receives the first ultraviolet ray, thus allowing the curing reaction to occur, the second ultraviolet ray is irradiated and then the fluorescence amount emitted from the photopolymerization initiator of the ultraviolet curing resin is measured. This fluorescence amount has a correlation with the curing reaction state of the ultraviolet curing resin, and therefore based on the time series behavior of this fluorescence amount, the curing reaction state can be determined in real time.

Preferably, when the measured fluorescence amount exceeds the threshold value, the determination part determines that this curing reaction has completed.

Also preferably, the determination part determines that this curing reaction has completed, when the variation amount of the measured fluorescence per unit time is below a prescribed value.

More preferably, the determination part gives an instruction to end the irradiation of the first ultraviolet ray, when the completion of the curing reaction is determined.

Also preferably, the determination part determines abnormality of this curing reaction, when the measured fluorescence amount is below the threshold value after elapse of a prescribed time from the start of the irradiation of the first ultraviolet ray.

Also preferably, the determination part determines the abnormality of this curing reaction, when the variation amount of the measured fluorescence per unit time is outside a prescribed range, after elapse of a prescribed time from the start of the irradiation of the first ultraviolet ray.

Also preferably, the determination part compares the time series behavior with a previously defined reference time series behavior and determines whether the curing reaction from the measured fluorescence amount is normal.

More preferably, the determination part determines that the curing reaction is abnormal, when a deviation of the measured fluorescence amount from the reference time series behavior is outside a prescribed range.

Preferably, there is further provided a first display part for displaying the reference time series behavior and the time series behavior of the measured fluorescence amount, on the same coordinates.

More preferably, the first displayer further displays the time series behavior of the deviation of the measured fluorescence amount from the reference time series behavior.

Preferably, there is further provided a second displayer for displaying a progress degree of the curing reaction of the ultraviolet curing resin that occurs when the first ultraviolet ray is received.

More preferably, the second displayer calculates the progress degree of the curing reaction based on a ratio of the measured fluorescence amount to a reaction completed fluorescence amount, which is the fluorescence amount for which the curing reaction is regarded as completed.

More preferably, the second displayer calculates the reaction completed fluorescence amount based on the time series behavior of the previously measured fluorescence amount.

Also more preferably, the second displayer is constituted, so that the reaction completed fluorescence amount can be changed in accordance with an input value from outside.

Preferably, the second displayer is constituted to display the progress degree of the curing reaction numerically. Also preferably, the second displayer is constituted to display the progress degree of the curing reaction by indicators.

Preferably, the second displayer is constituted to display the progress degree of the curing reaction using a color within a wavelength band whose wavelength is at least a predetermined length longer than the wavelength bands of the first and second ultraviolet rays.

Preferably, there is further provided a threshold value setting part that sets a prescribed threshold value used for determining the completion of the curing reaction based on the time series behavior of the measured fluorescence amount.

Also preferably, there is further provided a threshold value setting part that sets a prescribed threshold value used for determining the completion of the curing reaction based on the fluorescence amount at the time point when a prescribed characteristic mode is generated in the time series behavior of the measured fluorescence amount.

More preferably, the threshold value setting part sets a prescribed threshold value based on the fluorescence amount at the time point when the variation amount of the fluorescence amount per unit time is within a prescribed range.

Preferably, there is further provided a threshold value setting part that sets a prescribed threshold value used for determining the completion of the curing reaction based on the fluorescence amount at a point when a prescribed time is elapsed from the start of the irradiation of the first ultraviolet ray in the time series behavior of the measured fluorescence amount.

Preferably, there is further provided a visual notice part for visually informing a user about the irradiation of the second ultraviolet ray, during a period when the second ultraviolet ray is irradiated by the irradiation part.

Preferably, there is further provided the light source part for generating the first ultraviolet ray.
Further another aspect of the present invention provides a curing method of the ultraviolet curing resin containing a primary agent composed of at least one of the monomer and oligomer and further containing the photopolymerization initiator, using the ultraviolet irradiation apparatus. The ultraviolet irradiation apparatus includes the light source device and the curing reaction detector. The curing method of the ultraviolet curing resin includes the steps of: irradiating the first ultraviolet ray from the light source device for curing the ultraviolet curing resin; irradiating the second ultraviolet ray from the curing reaction detector for activating the ultraviolet curing resin; measuring the fluorescence amount emitted from the photopolymerization initiator after receiving the second ultraviolet ray; determining the curing reaction state of the ultraviolet curing resin based on the time series behavior of the measured fluorescence amount; and controlling the irradiation of the first ultraviolet ray based on the determined curing reaction state.

According to the curing method of the ultraviolet curing resin of this aspect, the first ultraviolet ray is irradiated to accelerate the curing reaction of the ultraviolet curing resin, and the second ultraviolet ray is irradiated to measure the fluorescence amount emitted from the photopolymerization initiator of the ultraviolet curing resin. This fluorescence amount has a correlation with the curing reaction state of the ultraviolet curing resin, and therefore the curing reaction state can be determined in real time based on the time series behavior of this fluorescence amount.

According to the present invention, it is possible to realize an ultraviolet irradiation apparatus capable of determining the curing reaction state in real time for the ultraviolet curing resin of general purpose of use, a curing reaction detector used for the same and a curing method of the ultraviolet curing resin using this curing reaction detector.

### BRIEF DESCRIPTION OF THE DRAWINGS

Fig. 1 is an outlined block diagram of an ultraviolet ray irradiation apparatus according to a first embodiment of the present invention;
Fig. 2 is a more detailed outlined block diagram of a curing reaction detector;
Fig. 3 is an optical arrangement view between a fluorescence measurement head part and a workpiece;
Fig. 4 is a time chart showing a time series waveform of each part according to fluorescence measurement;
Fig. 5 is a processing block diagram for determining a completion of a curing reaction based on a measured fluorescence amount;
Fig. 6 is a time chart according to a determination for completing the curing reaction based on the measured fluorescence amount;
Fig. 7 is a flowchart according to the determination for completing the curing reaction based on the measured fluorescence amount;
Fig. 8 is a processing block diagram for determining the completion of the curing reaction based on a variation amount of the measured fluorescence amount per unit time;
Fig. 9 is a time chart retarding the determination for completing the curing reaction based on the variation amount of the measured fluorescence amount per unit time;
Fig. 10 is a flowchart according to the determination for completing the curing reaction based on the variation amount of the measured fluorescence amount per unit time;
Fig. 11 is a time chart according to abnormality determination of the curing reaction based on the fluorescence amount;
Fig. 12 is a flowchart according to the abnormality determination of the curing reaction based on the fluorescence amount;
Fig. 13 is a time chart according to the abnormality determination of the curing reaction based on the variation amount of the measured fluorescence amount per unit time;
Fig. 14 is a flowchart according to the abnormality determination of the curing reaction based on the variation amount of the measured fluorescence amount per unit time;
Fig. 15 is a time chart according to the abnormality determination of the curing reaction based on an entire body of a time series behavior of the measured fluorescence amount;
Fig. 16 is a flowchart according to the abnormality determination of the curing reaction based on the entire body of the time series behavior of the measured fluorescence amount;
Fig. 17 is a view showing an example of a display content in a displayer;
Fig. 18 is a view showing an example of a progress degree display of the curing reaction in the displayer;
Fig. 19 is a view showing another example of the progress degree display of the curing reaction in the displayer;
Fig. 20 is a view for explaining a process of calculating the progress degree of the curing reaction;
Fig. 21 is a display example in the displayer when a user sets a reaction completion time;
Fig. 22 is a view showing an example of visibility characteristics, in a state of wearing an eye protector;
Fig. 23 is a view for explaining the processing in a first threshold value setting mode;
Fig. 24 is a flowchart showing the processing according to the first threshold value setting mode;
Fig. 25 is a view for explaining the processing in a second threshold value setting mode;
FIG. 26 is a flowchart showing the processing according to the second threshold value setting mode;
Fig. 27 is a view for explaining another aspect of the processing in the second threshold value setting mode;
Fig. 28 is a view for explaining the processing in a third threshold value setting mode;
Fig. 29 is a flowchart showing the processing according to the third threshold value setting mode;
Fig. 30 is an outlined block diagram of a curing reaction detector according to a second embodiment of the present invention; and
Fig. 31 is a view showing the time series variation of irradiation intensity when a common ultraviolet ray generating mechanism is used.

### DETAILED DESCRIPTION OF THE PREFERRED EMBODIMENTS

Preferred embodiments of the present invention will be explained in detail, with reference to the drawings. Note that the same sighs and numerals are assigned to the same parts or the corresponding parts in the figure, and the explanation therefore is not repeated.

### First Embodiment

### Outlined structure of an ultraviolet irradiation apparatus

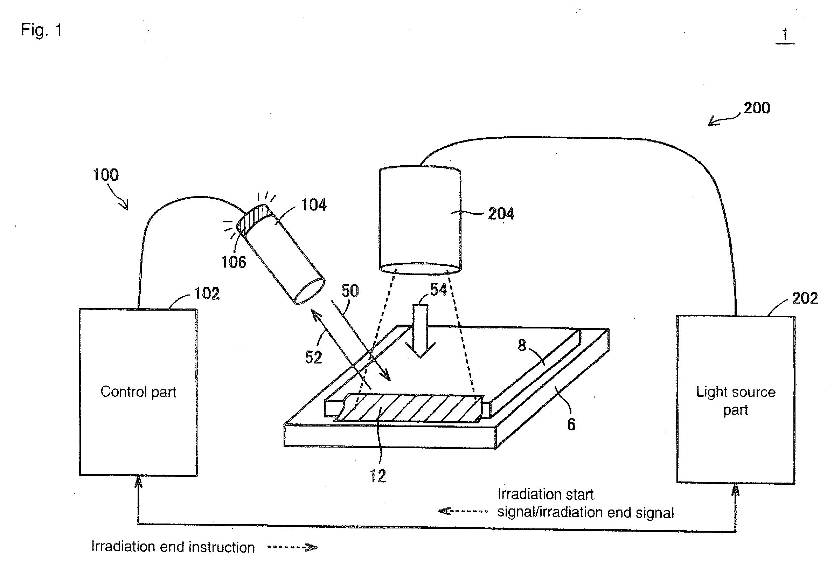

Fig. 1 is an outlined block diagram of an ultraviolet irradiation apparatus 1 according to a first embodiment of the present invention.

With reference to Fig. 1, the ultraviolet irradiation apparatus 1 according to the first embodiment of the present invention includes a light source device 200 that irradiates curing ultraviolet rays 54 (i.e. ultraviolet light) for promoting a curing reaction of the ultraviolet curing resin; and a curing reaction detector 100 that detects the curing reaction that occurs when the ultraviolet curing resin receives the curing ultraviolet ray. The ultraviolet irradiation apparatus 1 has a configuration in which a bonded material 8 is disposed on a base material 6, then , the bonded material 8 and the base material 6 are bonded together by using an ultraviolet curing resin 12. Note that the base material 6, the bonded material 8, and the ultraviolet curing resin 12 are integrally formed and such an integral body is called a "workpiece". The ultraviolet curing resin 12 contains a primary agent composed of at least one of monomer and oligomer and further contains a photopolymerization initiator, thus allowing a curing reaction to occur by receiving ultraviolet rays.

The light source device 200 includes an irradiation head part 204 for generating a curing ultraviolet ray 54, and a light source part 202 for driving the irradiation head part 204. The irradiation head part 204 is a mechanism for generating the curing ultraviolet ray 54, and as an example, includes an ultraviolet LED (Light Emitting Diode) and an ultraviolet lamp, and so forth. The irradiation head part 204 is, for example, disposed on a vertical upper part of a workpiece, so that the curing ultraviolet ray 54 irradiated from the irradiation head part 204 is incident to the ultraviolet curing resin 12. The light source part 202 is electrically connected to the irradiation head part 204, and supplies drive power for generating the curing ultraviolet ray 54 from the irradiation head part 204. In this embodiment, the curing ultraviolet ray 54 is irradiated at an intensity that is approximately constant over time. Namely, irradiation intensity of the curing ultraviolet ray 54 is mainly composed of a direct current (DC) component.

In addition, the light source part 202 is electrically connected to the curing reaction detector 100, and sends an irradiation state signal of the curing ultraviolet ray 54, for example, an irradiation start signal and an irradiation end signal to the curing reaction detector 100. Further, the light source part 202 is constituted to start the irradiation of the curing ultraviolet ray 54 in accordance with an irradiation start instruction (not shown) from a user and an external device, and stop the irradiation of the curing ultraviolet ray 54, responding to an irradiation end instruction from the curing reaction detector 100.

The curing reaction detector 100 includes a fluorescence measurement head part 104 and a control part 102. The fluorescence measurement head part 104 generates an exciting ultraviolet ray 50 for activating the ultraviolet curing resin 12, responding to an irradiation command received from the control part 102. The fluorescence measurement head part then irradiates the exciting ultraviolet ray 50 onto the ultraviolet curing resin 12. The exciting ultraviolet ray 50 receives a fluorescence 52 emitted from the ultraviolet curing resin 12, and outputs a signal showing the detected fluorescence amount to the control part 102. In addition, a display lamp 106 is disposed in an upper part of the fluorescence measurement head part 104 for visually informing a user about the irradiation of the exciting ultraviolet ray 50 during an irradiation period. The display lamp 106 is turned on/off during the irradiation period of the exciting ultraviolet ray 50, to let the user in the circumference know that ultraviolet rays are irradiated, thus urging the user to take a protective measure.

The control part 102 gives the irradiation command to the fluorescence measurement head part 104 in accordance with an irradiation state of the light source device 200 and measures the fluorescence amount emitted from the photopolymerization initiator included in the ultraviolet curing resin 12 based on the signal showing the fluorescence amount outputted from the fluorescence measurement head part 104. More specifically, when the irradiation start signal is received from the light source part 202, the control part 102 gives the irradiation command to the fluorescence measurement head part 104 and starts the irradiation of the exciting ultraviolet ray 50, and also starts the measurement of the fluorescence amount emitted from the photopolymerization initiator. Further, when the irradiation end signal from the light source part 202 is received, the control part 102 gives the irradiation command to the fluorescence measurement head part 104 and ends the irradiation of the exciting ultraviolet ray 50 and also ends the measurement of the fluorescence amount emitted from the photopolymerization initiator.

Further, based on the time series behavior (i.e. transient behavior, such as a time series profile) of the measured fluorescence amount, the control part 102 determines the curing reaction state of the ultraviolet curing resin 12. As will be described later, in accordance with the determined curing reaction state, the control part 102 controls the irradiation of the curing ultraviolet ray 54 or determines an existence/non-existence of generation of abnormality (normality) in the curing reaction of the ultraviolet curing resin 12.

### Ultraviolet curing resin

The ultraviolet curing resin 12 used in the ultraviolet irradiation apparatus 1 according to the first embodiment of the present invention is mainly a liquid before irradiation of the ultraviolet ray (i.e. ultraviolet light) and changed (cured) into a solid after irradiation of the ultraviolet ray. Note that in this specification, the "ultraviolet curing resin" is used in a generic meaning, irrespective of its state (a liquid state before irradiation of the ultraviolet ray or a solid state after irradiation of the ultraviolet ray).

The ultraviolet curing resin before irradiation of the ultraviolet ray (before curing) contains at least one of monomer and oligomer, and further contains a photopolymerization initiator, and each kind of additive agent. The monomer and the oligomer are primary agents allowing a polymerizing reaction (such as a main chain reaction and a cross-linking reaction) to occur, due to radicals and cations generated by the photopolymerization initiator when the ultraviolet ray is received. Then, along with such a polymerizing reaction, the monomer and oligomer are changed into a polymer, having a very large molecular weight and an increased melting point. As a result, the ultraviolet curing resin cannot maintain a liquid state, thus being solidified.

As an example, the monomer and the oligomer may be composed of polyester acrylate, urethane acrylate, polybutadiene acrylate, silicon acrylate, and epoxy acrylate, etc. The monomer is also called a monomeric substance and is set in a state of being a raw material for synthesizing the polymer by the polymerizing reaction. Meanwhile, the oligomer is also called a low polymer and is set in a state of relatively a low polymerization degree of about 2 to 20.

Photopolymerization initiators can be broadly classified into radical polymerization initiators that receive the ultraviolet ray to generate radicals, and cation polymerization initiators that receives the ultraviolet ray to generate cations. Note that radical polymerization initiators are used for acrylic monomers and oligomers, and cation polymerization initiators are used for epoxy-based or vinyl ether-based monomers and oligomers. Further, a photopolymerization initiator composed of a mixture of a radical polymerization initiator and a cation polymerization initiator may also be used.

Radical polymerization initiators can be broadly classified into a hydrogen pull-off type and an intramolecular cleavage type in accordance with a generation process of the radical. The hydrogen pull-off type is, for example, composed of benzophenone or o-benzoylbenzoate methyl, etc. Meanwhile, the intramolecular cleavage type is, for example, composed of benzoin ether, benzyl dimethyl ketal, a-hydroxyalkylphenone, a-aminoalkylphenone, o-benzoylbenzoate methyl (OBM), 4-benzoyl-4'-methyldiphnyl sulfide (BMS), isopropylthioxanthone (IPTX), diethylthioxanthone (DETX), ethyl4-(diethylamino)benzoin ether (DAB), 2-hydroxy-2-methyl-1-phenyl-propane-on, benzyl dimethyl ketal BDK), or 1, 2a hydroxyalkyl phenone, etc.

In addition, the cation polymerization initiator is, for example, composed of a diphenyliodonium salt, etc. Note that in this specification, "photopolymerization initiator" is used in the meaning of not only substances that retain the capability of initiating the photopolymerizing reaction, but also for substances that do not contribute to the initiation of the photopolymerizing reaction any more due to the change of an original photopolymerization initiator that has contributed to the photopolymerizing reaction or by not having the monomer and oligomer, which are subject to the photopolymerizing reaction, present in the circumference. Here, the photopolymerization initiator after contributing to the photopolymerizing reaction is, in many cases, bonded to the terminal of polymer ends in a state that its molecule is divided into two or more molecules while an initial molecular size is maintained.

As described above, the inventors of the present invention found that the photopolymerization initiator itself contained in the ultraviolet curing resin 12 emits an observable fluorescence that correlates with the state (such as the curing degree) of the ultraviolet curing resin 12.

More specifically, using a spectrum analyzer, the inventors of the present invention examined a wavelength of light emitted when each of a number of typical ultraviolet curing resins (22 kinds in total) was irradiated with an exciting ultraviolet ray 50 having a wavelength of 365nm. As a result, it was confirmed that light (fluorescence) having a longer wavelength than the wavelength of the exciting ultraviolet ray 50 was emitted from each of the ultraviolet curing resins.

Here, the photopolymerization initiator included in the ultraviolet curing resin has the following property.
(1) Capability (quantum yield and molar optical absorption) of producing active species (such as radical and acid) for initiating the polymerizing reaction is high.

(2) Highly reactive active species are produced.
(3) A spectrum area of an exciting energy for exhibiting a production capability of the active species is an ultraviolet area.

Namely, the photopolymerization initiator having a molecular structure easy to absorb the ultraviolet ray is adopted, and energy (electron) obtained by absorbing the ultraviolet ray can be easily given to other molecules.

Meanwhile, the monomer and oligomer, being the primary agents of the ultraviolet curing resin, are considered to emit almost no fluorescence, because of the structure hardly allowing a carrier (electron) to smoothly move in the molecule.

Accordingly, the inventors of the present invention concluded that essentially the photopolymerization initiator was a substance having the property of receiving the ultraviolet ray and emitting the fluorescence.

### Outlined structure of the curing reaction detector

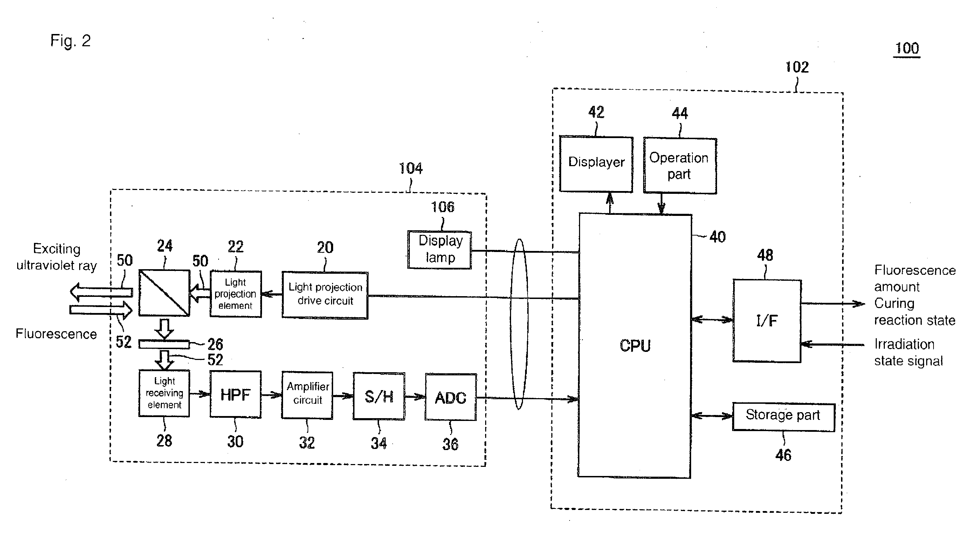

Fig. 2 is a more detailed view of an outlined structure of the curing reaction detector 100.

With reference to Fig. 2, the control part 102 includes a CPU (Central Processing Part) 40, a display part 42, an operation part 44, a storage part 46, and an interface part (I/F) 48.

The CPU 40 serves as a controller for supervising an overall processing of the curing reaction detector 100, and realizes the processing described below, by reading and executing a program stored in the storage part 46. Specifically, the CPU 40 responds to an irradiation state signal (irradiation start signal and irradiation end signal) given from the light source part 202 (Fig. 1) via the interface part 48, and gives an irradiation command to the fluorescence measurement head part 104. Then, based on the signal showing the fluorescence amount given from the fluorescence measurement head part 104, the fluorescence amount emitted from the photopolymerization initiator is measured. Based on the time series behavior of the fluorescence amount thus measured, the CPU 40 determines the curing reaction state of the ultraviolet curing resin 12. Then, when it is so determined that this curing reaction is completed, the CPU 40 gives the irradiation end instruction to the light source part 202 (Fig. 1) and stops the irradiation of the curing ultraviolet ray 54. Further, the CPU 40 stores the time series behavior of the measured fluorescence amount in the storage part 46, displays the curing reaction state of the ultraviolet curing resin 12 on the display part 42, and outputs it to outside via the interface part 48.

The display part 42 serves as a displayer for displaying information for a user, according to the curing reaction, and for example is constituted by including an LCD (Liquid Crystal Display) and a CRT (Cathode-Ray Tube), etc.

The operation part 44 (which is a man-machine interface) serves as a command input device for receiving an operation command from the user, and for example includes a switch, a touch panel, or a mouse, etc, and outputs to outside the operation command according to a user operation.

The storage part 46 serves as a device capable of storing in a nonvolatile manner the program executed by the CPU 40 and the time series behavior in the past, and for example, includes a hard disc or a flash memory, etc.

The interface part 48 serves as a device for intermediating a communication between external devices and the CPU 40, and for example, includes a digital analogue converter (DAC), an USB (Universal Serial Bus), or Ethernet (registered trademark), etc.

In addition, the fluorescence measurement part 104 includes a projecting and driving circuit 20, a projecting element 22, a half mirror 24, an optical filter 26, a light receiving element 28, an HPF (High Pass Filter) 30, an amplifier circuit 32, a sample and hold circuit 34, and an analog/digital converter (ADC) 36.

The projecting and driving circuit 20 serves as a device to supply power for generating the exciting ultraviolet ray 50 (UV light) with the projecting element 22, in accordance with the irradiation command from the CPU 40. The exciting ultraviolet ray 50 is generated so as to change its intensity periodically, thereby making it possible to accurately measure the fluorescence amount emitted from the photopolymerization initiator. Particularly, in this embodiment, explanation will be given for a structure in which the intensity of the exciting ultraviolet ray 50 is changed to a pulse shape. Therefore, the projecting and driving circuit 20 supplies to the projecting element 22 a pulse-shaped driving power that changes at a prescribed cycle, in a period in which the irradiation command is given from the CPU 40.

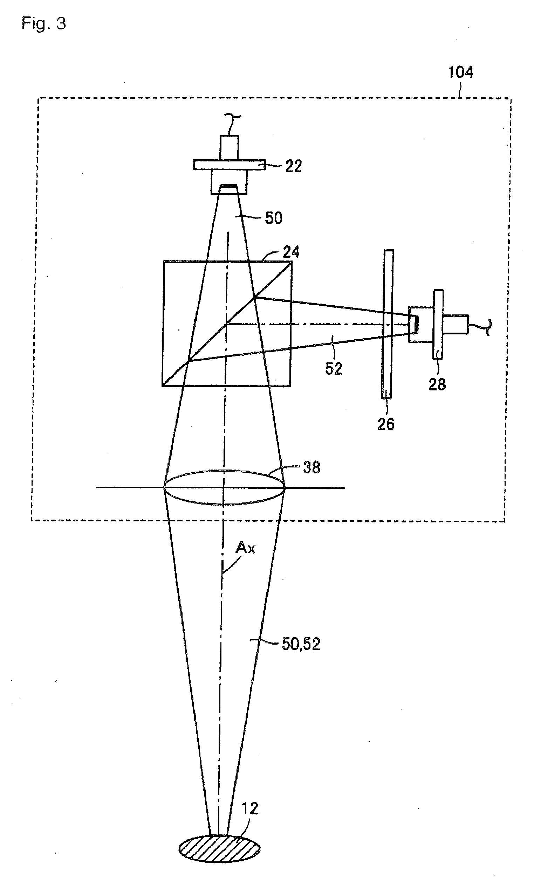

Fig. 3 is an optical arrangement view between the fluorescence measurement head part 104 and the workpiece.
With reference to Fig. 2 and Fig. 3, the fluorescence measurement head part 104 further includes a converging lens 38. The projecting element 22, the half mirror 24, the converging lens 38 and the ultraviolet curing resin 12 to be irradiated, are arranged on a common optical axis Ax. Also, the half mirror 24, the optical filter 26, and the light receiving element 28 are arranged on the same straight line in a perpendicular direction with respect to the optical axis Ax.

Then, the driving power is supplied from the projecting and driving circuit 20, and the exciting ultraviolet ray 50 generated by the projecting element 22 is irradiated so as to pass through the half mirror 24 and the converging lens 38 so as to focus on the ultraviolet curing resin 12. Then, the ultraviolet curing resin 12 generates fluorescence 52 in accordance with the irradiation of the exciting ultraviolet ray 50. The generated fluorescence 52 is propagated in an opposite direction on approximately the same route as that of the exciting ultraviolet ray 50 and is made incident to the half mirror 24. Then, a propagation route of the exciting ultraviolet ray 50 is changed by the half mirror 24 in the perpendicular direction to the propagating direction, and is made incident to the light receiving element 28 via the optical filter 26.

Thus, when the half mirror 24 changes the propagating direction of the fluorescence 52 received from the ultraviolet curing resin 12, it is possible to separate the exciting ultraviolet ray 50 from the fluorescence 52, which are propagating on the same straight line, thus making it possible to surely detect the fluorescence 52 of a weak intensity by the light receiving element 28.

The projecting element 22 serves as an ultraviolet ray generator that generates the exciting ultraviolet ray 50, and is for example, configured by an ultraviolet LED. Note that preferably, the main emission peak of the exciting ultraviolet ray 50 generated by the projecting element 22 is 365nm. The half mirror 24 serves as a reflection member for differentiating a reflectivity depending on an incident direction of the ultraviolet ray, and as an example, its reflecting surface is formed by metal vapor deposition. The optical filter 26 is disposed for suppressing a direct incident of the exciting ultraviolet ray 50 irradiated from the projecting element 22, to the light receiving element 28, so that the light in a visible area is transmitted through this filter while the light in the ultraviolet area is attenuated. For example, the optical filter 26 is configured by a dielectric multilayered filter for transmitting the light with the wavelength of 410nm or more. The light receiving element 28 is, for example, configured by photodiode, and generates a current according to the intensity of the florescence transmitted through the optical filter 26 and made incident to this light receiving element 28.

Explanation will be given hereunder for a measurement method of the fluorescence amount emitted from the photopolymerization initiator contained in the ultraviolet curing resin 12, and the HPF 30, the amplifier circuit 32, the sample and hold circuit 34, and the analog/digital converter 36.

As shown in Fig. 1, in the ultraviolet irradiation apparatus 1 according to this embodiment, the curing ultraviolet ray 54 is irradiated onto the ultraviolet curing resin 12 from the light source device 200. Therefore, the fluorescence is considered to be generated from the photopolymerization initiator contained in the ultraviolet curing resin 12, in accordance with the irradiation of the curing ultraviolet ray 54, in addition to the irradiation of the exciting ultraviolet ray 50. Accordingly, in this embodiment, the ultraviolet rays are separated with respect to their frequency range. Namely, the curing ultraviolet ray 54 mainly having a direct current (DC) component, and the exciting ultraviolet ray 50 containing an alternate current component (such as pulse-like change) in its intensity, are irradiated and then the fluorescence amount generated by the exciting ultraviolet ray 50 is measured based on a periodic component corresponding to an intensity variation period of the exciting ultraviolet ray 50, out of the signals showing the fluorescence amount measured by irradiation of the curing ultraviolet ray 54 and the exciting ultraviolet ray 50.

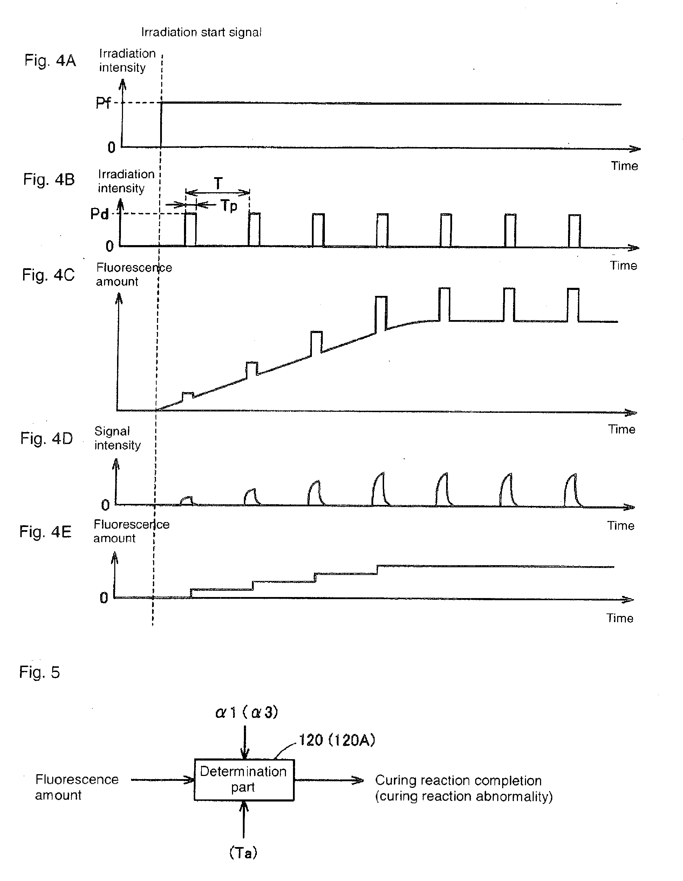

Fig. 4 is a time chart showing a time-waveform of each part according to a fluorescence measurement.
Fig. 4A shows a time series variation of an irradiation intensity of the curing ultraviolet ray 54. Fig. 4B shows the time series variation of the irradiation intensity of the exciting ultraviolet ray 50. Fig. 4C shows the time series variation of the fluorescence amount measured by the light receiving element 28. Fig. 4D shows the time series variation of a signal strength outputted from the HPF 30. Fig. 4E shows the time series variation of the fluorescence amount outputted from the sample and hold circuit 34.

As shown in Fig. 4A, when the irradiation start instruction is given to the light source part 202 (Fig. 1), the irradiation of the curing ultraviolet ray 54 having approximately a constant irradiation intensity Pf is started from the irradiation head part 204 (Fig. 1). For example, the irradiation intensity Pf of the curing ultraviolet ray 54 is set at about 20mW.

In synchronization with the start of the irradiation of the curing ultraviolet ray 54, as shown in Fig. 4B, the irradiation of the exciting ultraviolet ray 50 is started from the projecting element 22 (Figs. 2, 3) for alternately changing the intensity zero and the irradiation intensity Pd at a cycle T. In addition, time Tp (Tp < T) is set as a period in which the intensity is turned into the irradiation intensity Pd in each cycle. For example, the irradiation intensity Pd is set at 12mW, the cycle T is set at 0.35ms, and the time Tp is set at 18µs.

The fluorescence amount emitted from the photopolymerization initiator has a correlation with the curing reaction state of the ultraviolet curing resin 12, and therefore as the curing reaction is progressed by the irradiation of the curing ultraviolet ray 54, as shown in Fig. 4C, the fluorescence amount measured by the light receiving element 28 is also changed. Namely, the time series behavior of the fluorescence amount measured by the light receiving element 28 includes a local time series variation depending on the exciting ultraviolet ray 50 whose intensity is changed periodically, in addition to an overall increase according to the curing reaction state of the ultraviolet curing resin 12.

The HPF 30 shown in Fig. 2 serves as a filter for extracting the local time series variation of the fluorescence amount measured by the light receiving element 28, and is designed so that a component of higher frequency than the cycle component (1/T) corresponding to the intensity variation cycle of the exciting ultraviolet ray 50 is passed through this filter. In the signal strength outputted from this HPF 30, as shown in Fig. 4D, mainly the DC component derived from the curing ultraviolet ray 54 is removed, and the AC component (pulse component) derived from the exciting ultraviolet ray 50 is extracted. Here, a maximum amplitude value (peak value) of each pulse in an output signal from the HPF 30 shows the fluorescence amount emitted from the ultraviolet curing resin 12 (more accurately the photopolymerization initiator) by the irradiation of the exciting ultraviolet ray 50.

Therefore, the amplifier circuit 32 shown in Fig. 2 amplifies the output signal from the HPF 30 by a prescribed amplification factor (current/voltage conversion rate) and outputs it to the sample and hold circuit 34. Then, in synchronization with the timing for irradiating the exciting ultraviolet ray 50 with the intensity of the projecting element 22 set at irradiation intensity Pd, the sample and hold circuit 34 samples the output signal from the HPF 30, and holds a sampled signal value until the next sampling. Thus, as sown in Fig. 4E, a value depending on the maximum amplitude value of each pulse is outputted from the sampling and hold circuit 34. The signal (analogue voltage signal) outputted from the sample and hold circuit 34 is converted to a digital signal by an analog/digital conversion part 36 (Fig. 2), and is outputted to the CPU 40 as a measurement value of the fluorescence. Note that in order to suppress an influence of measurement errors, the fluorescence amount outputted from the analog/digital conversion part 36 is subjected to averaging processing (such as movement averaging processing), and may be set as the fluorescence amount of the photopolymerization initiator at each time point. For example, when the movement averaging processing is applied to 256 data points, a measurement cycle of the phosphor amount is 89.6ms (= 0.35ms × 256).

As described above, the curing reaction detector 100 can detect the weak fluorescence amount by using an exciting ultraviolet ray 50 that can be separated from the curing ultraviolet ray 54 with respect to the frequency range, thereby eliminating the influence of the fluorescence by the curing ultraviolet ray 54. Note that for convenience of explanation, Fig. 4 schematically shows a case that a curing time of the ultraviolet curing resin 12 is extremely shorter than the cycle T of the exciting ultraviolet ray 50. However, actual curing time of the ultraviolet curing resin 12 is extremely longer (about several seconds to several tens of seconds) than the cycle T (for example, 0.35ms) of the exciting ultraviolet ray 50. Therefore, the ultraviolet curing resin 12 can be irradiated with a sufficient amount of exciting ultraviolet rays 50 with respect to a completion time of the curing reaction of the ultraviolet curing resin 12, and therefore a high measurement accuracy of the fluorescence can be realized.

In addition, in many cases, the curing ultraviolet ray 54 is irradiated with approximately a time-constant intensity. However, in a case that the curing ultraviolet ray 54 has a cyclic intensity variation, it is possible to cope with this case by setting the intensity variation cycle of the exciting ultraviolet ray 50 as a different cycle from the intensity variation cycle of the curing ultraviolet ray 54 (for example, as a cycle shorter than the intensity variation cycle of the curing ultraviolet ray 54).

Further, when illuminating light having the same wavelength band as that of the fluorescence emitted from the ultraviolet curing resin 12 is present in a surrounding environment of the ultraviolet ray irradiation apparatus 1, this illuminating light becomes disturbance light in measuring the fluorescence amount. It is also possible to cope with this disturbance light by the same method as described above. For example, when the intensity of the illuminating light that exists in the surrounding environment is periodically fluctuated, due to the frequency of a commercial power supply, the intensity variation cycle of the exciting ultraviolet ray 50 may be set shorter than the cycle corresponding to the frequency of the commercial power supply.

### Processing 1 according to determination for completion of the curing reaction

As an example of determination processing of the curing reaction state based on the time series behavior of the measured fluorescence amount, explanation will be given for the processing of performing determination for completion of the curing reaction of the ultraviolet curing resin 12.

In a plurality of ultraviolet curing resins, the fluorescence amount generated with the progress of the curing reaction is increased. The following mechanism is considered for the reason therefore. Namely, the photopolymerization initiator is consumed with the progress of the curing reaction (namely, the polymerizing reaction), thus decreasing the unreacted photopolymerization initiator. Therefore, out of the optical energy obtained by the irradiation of the ultraviolet ray absorbed by the photopolymerization initiator, the amount used as a chemical energy used for generating the active species (such as radical and acid) for generating the polymerizing reaction is decreased. Meanwhile, the photopolymerization initiator has still a property of easily absorbing the ultraviolet ray even after being used for the polymerizing reaction. Therefore, optical energy amount generated by absorbing the exciting ultraviolet ray 50 by the photopolymerization initiator is maintained, which is then converted to energy of a different form from the form of the chemical energy such as fluorescence or heat. As a result, tendency of increasing the fluorescence amount appears with the progress of the curing reaction of the ultraviolet curing resin. Further, such a tendency is derived from a basic composition of the ultraviolet curing resin, and therefore can be commonly observed in a plurality of ultraviolet curing resins.

Accordingly, based on the fluorescence amount emitted from the ultraviolet curing resin 12, the completion of the curing reaction can be determined. An example of the structure for determining the completion of the curing reaction with a comparison between the measured fluorescence and a prescribed threshold value is shown hereunder.

Fig. 5 is a processing block diagram for determining the completion of the curing reaction based on the measured fluorescence amount. This processing block diagram is realized by the program executed by the CPU 40 (Fig. 2) of the control part 102.

With reference to Fig. 5, a determination part 120 compares the measured fluorescence amount with a previously set threshold value α1, and issues a message such as "the completion of the curing reaction" when the measured fluorescence exceeds the threshold value α1. Note that when such a "curing reaction completion" is issued, the irradiation end instruction is given to the light source part 202 from the curing reaction detector 100 (CPU 40), and the irradiation of the curing ultraviolet ray 54 is stopped. With the stop of the irradiation of the curing ultraviolet ray 54, the irradiation of the exciting ultraviolet ray 50 is also stopped.

The threshold value α1 is varied, depending on the kind of the ultraviolet curing resin to be irradiated. Therefore, the threshold value α1 is previously obtained experimentally according to the kind, and is stored in the storage part 46 (Fig. 2), etc, and the user may select the threshold value α1 according to the ultraviolet curing resin to be irradiated, when it is used.

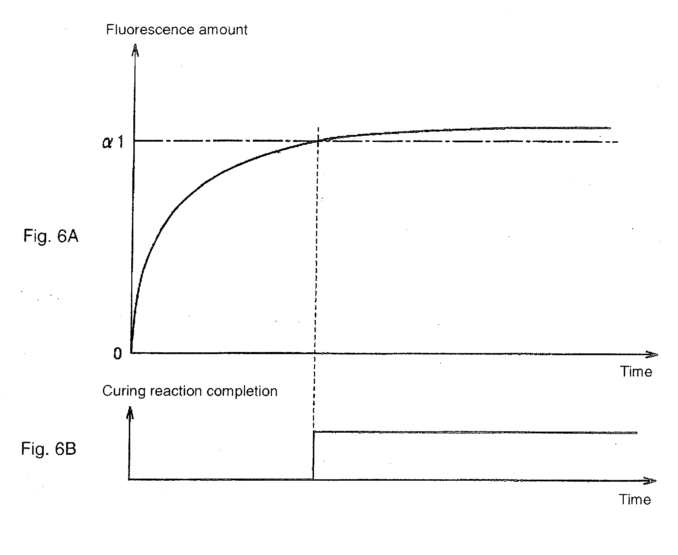

Fig. 6 is a time chart according to the determination for the completion of the curing reaction based on the measured fluorescence amount. Fig. 6A shows the time series variation of the measured fluorescence, and Fig. 6B shows a generation timing of the completion of the curing reaction. Note that the time axis of Fig. 6 is set with the irradiation start timing of the curing ultraviolet ray 54 as a reference.

With reference to Fig. 6A, for example, when the irradiation of the curing ultraviolet ray 54 is started, the measured fluorescence is monotonously increased. When the fluorescence amount that monotonously increases exceeds the prescribed threshold value α1, as shown in Fig. 6B, the completion of the curing reaction is determined, and the message of "curing reaction completion" is issued.

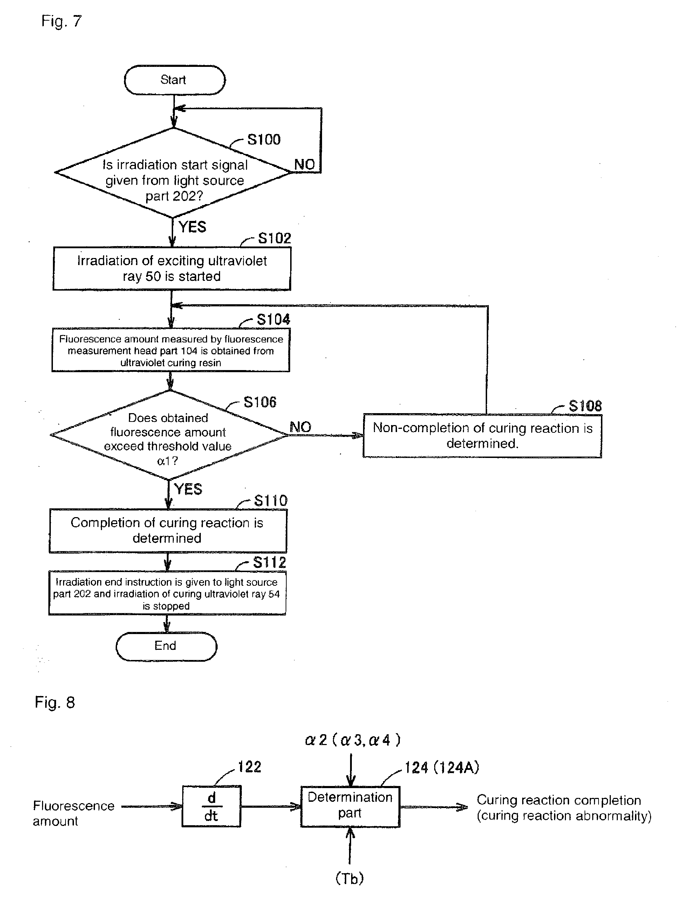

Fig. 7 is a flowchart according to the determination for the completion of the curing reaction based on the measured fluorescence. The flowchart shown in Fig. 7 is executed by the CPU 40 (Fig. 2) of the control part 102.

With reference to Fig. 7, first, determination is made on whether or not the irradiation start signal is given from the light source part 202 (step S100). Namely, determination is made on whether or not the irradiation of the curing ultraviolet ray 54 by the light source device 200 is started. Then, when the irradiation start signal is not given from the light source part 202 (NO in step S100), the processing is repeated until the irradiation start signal is given.

When the irradiation start signal is given from the light source part 202 (YES in step S100), the irradiation command is given to the fluorescence measurement part 104 and the irradiation of the exciting ultraviolet ray 50 is started (step S102). Subsequently, the fluorescence amount from the ultraviolet curing resin 12 measured by the fluorescence measurement head part 104 is obtained (step S104). Note that in obtaining processing of the fluorescence amount, the movement averaging processing is applied to the fluorescence amount obtained in time series.

Then, determination is made on whether or not the obtained fluorescence amount exceeds the threshold value α1 (step S106). When the obtained fluorescence amount does not exceed the threshold value α1 (NO in step S106), the completion of the curing reaction is determined (step S108), and the processing after step S104 is repeated.

When the obtained fluorescence amount exceeds the threshold value α1 (YES in step S106), the completion of the curing reaction is determined (step S110). Then, the irradiation end instruction is given to the light source part 202, and the irradiation of the curing ultraviolet ray 54 is stopped (step S112). Then, the processing is ended.

Thus, by performing the determination for the completion of the curing reaction based on the measured fluorescence, the curing reaction of the ultraviolet curing resin 12 can be surely completed, irrespective of a magnitude of the irradiation intensity of the curing ultraviolet ray 54. Simultaneously, the irradiation time of the curing ultraviolet ray 54 can be optimized, thus making it possible to suppress excessive emission of the curing ultraviolet ray 54 to the ultraviolet curing resin 12. Thus, when a UV-lamp with relatively shorter lifetime and requiring a higher cost for the irradiation of the curing ultraviolet ray 54 is particularly used, the cost per each workpiece can be suppressed and also the downtime of a line that occurs by replacing the UV-lamp can be suppressed.

Note that as described above, explanation has been given for the structure that when the measured fluorescence amount exceeds the threshold value α1, the message of "curing reaction completion" is immediately issued. However, the message of "curing reaction completion" may be issued at the time point when a prescribed period is elapsed after the measured fluorescence amount exceeds the threshold value α1.

### Processing 2 according to the determination for the completion of the curing reaction

Instead of the structure of determining the completion of the curing reaction based on the measured fluorescence amount as described above, the structure of determining the completion of the curing reaction based on the variation amount (difference value or differentiated value) of the measured fluorescence amount per unit time may be adopted.

Namely, an increasing speed of the fluorescence amount with the progress of the curing reaction depends on a consuming speed of the photopolymerization initiator due to the irradiation of the ultraviolet ray, and therefore the increasing speed of the fluorescence amount is lowered after the curing reaction is sufficiently performed, namely after the polymerizing reaction is sufficiently progressed. Therefore, it is possible to determine the completion of the curing reaction with a comparison between the variation amount of the fluorescence amount per unit time and a prescribed threshold value.

Fig. 8 is a processing block diagram for determining the completion of the curing reaction based on the variation amount of the measured fluorescence amount per unit time. This processing block diagram is realized by the program executed by the CPU 40 of the control part 102 (Fig. 2).

With reference to Fig. 8, a time variation amount calculating part 122 calculates the variation amount of the measured fluorescence amount per unit time, and outputs it to a determination part 124. For example, the time variation amount calculating part 122 is configured by a difference operation part, wherein the fluorescence amount for each prescribed unit time is sampled, and the difference value between the fluorescence amount of the present time and the fluorescence amount of the previous time is outputted as the variation amount per unit time. Note that in the explanation given hereunder also, the "difference value of the fluorescence amount" is used as an example of the "variation amount of the measured fluorescence amount per unit time".

The determination part 124 compares the variation amount (difference value of the fluorescence) of the fluorescence amount calculated by the time variation amount calculating part 122 with a previously set threshold value α2, and when the difference value of the fluorescence amount exceeds the threshold value α2, the determination part 124 issues the message of "curing reaction completion". Note that when the message of the "curing reaction completion" is issued, the irradiation end instruction is given to the light source part 202 from the curing reaction detector 100 (CPU 40), and the irradiation of the curing ultraviolet ray 54 is stopped. With the stop of the irradiation of the curing ultraviolet ray 54, the irradiation of the exciting ultraviolet ray 50 is also stopped.

The threshold value α2 varies depending on the kind of the ultraviolet curing resin to be irradiated. Therefore, the threshold value α2 is previously obtained experimentally according to the kind of the ultraviolet curing resin, which is then stored in the storage part 46 (Fig. 2), etc, and when it is used, the user may select the threshold value α2 according to the ultraviolet curing resin to be irradiated.

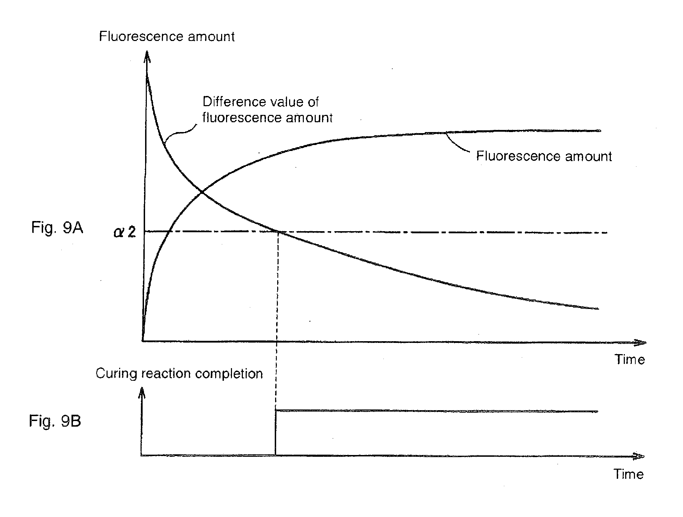

Fig. 9 is a time chart according to the determination for the completion of the curing reaction based on the variation amount of the measured fluorescence amount per unit time. Fig. 9A shows the measured fluorescence amount and the time series variation of the variation amount of the measured fluorescence amount per unit time, and Fig. 9B shows the generation timing of the completion of the curing reaction. Note that the time axis of Fig. 9 is set with the irradiation start timing of the curing ultraviolet ray 54 as a reference, and a reference point (zero point) of each waveform shown in Fig. 9A is not common.

With reference to Fig. 9A, for example, when the irradiation of the curing ultraviolet ray 54 is started, the measured fluorescence amount is monotonously increased. Meanwhile, the variation amount of the fluorescence amount (difference value of the fluorescence amount) per unit time is monotonously decreased. Then, when this difference value of the fluorescence amount is below the threshold value α2, as shown in Fig. 9B, the completion of the curing reaction is determined, and the message of "curing reaction completion" is issued.

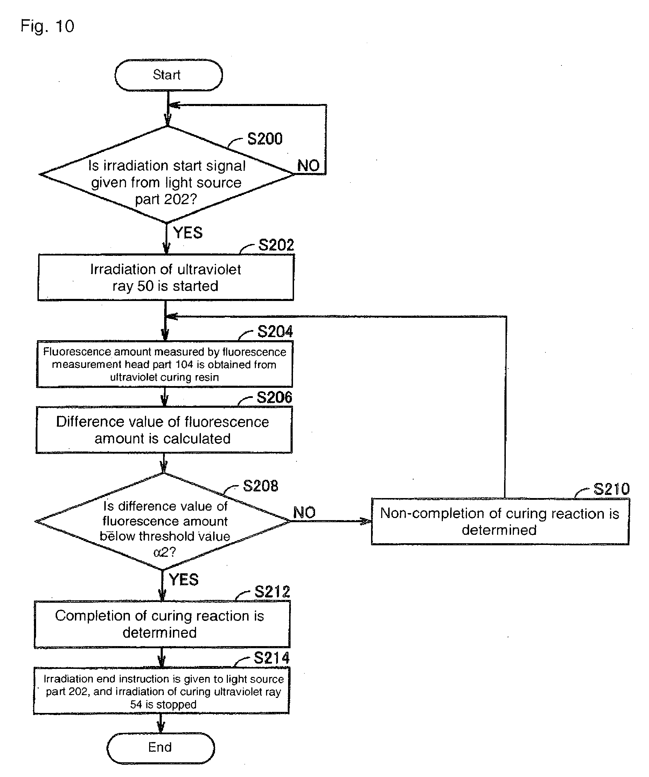

Fig. 10 is a flowchart according to the determination for the completion of the curing reaction based on the variation amount of the measured fluorescence amount per unit time. The flowchart shown in Fig. 10 is executed by the CPU 40 (Fig. 2) of the control part 102.

With reference to Fig. 10, first, determination is made on whether or not the irradiation start signal is given from the light source part 202 (step S200). Namely, determination is made on whether or not the irradiation of the curing ultraviolet ray 54 by the light source device 200 is started. Then, when the irradiation start signal is not given from the light source part 202 (NO in step S200), the processing is repeated until the irradiation start signal is given.

When the irradiation start signal is given from the light source part 202 (YES in step S200), the irradiation command is given to the fluorescence measurement head part 104, and the irradiation of the exciting ultraviolet ray 50 is started (step S202). Subsequently, the fluorescence amount from the ultraviolet curing resin 12 measured by the fluorescence measurement head part 104 is obtained (step S204). Note that in the obtaining processing of this fluorescence amount, the movement averaging processing is applied to the fluorescence amount obtained in time series. Further, based on the fluorescence amount obtained previously and the fluorescence amount obtained this time, the difference value of the fluorescence amount is calculated (step S206).

Then, determination is made on whether or not the calculated difference value of the fluorescence amount is below the threshold value α2 (step S208). When the obtained fluorescence amount is not below the threshold value α2 (NO in step S208), the completion of the curing reaction is determined (step S21 0), and the processing after step S204 is repeated.

When the calculated difference value of the fluorescence amount is below the threshold value α2 (YES in step S208), the completion of the curing reaction is determined (step S212). Then, the irradiation end instruction is given to the light source part 202, and the irradiation of the curing ultraviolet ray 54 is stopped (step S214). Then, the processing is ended.

Thus, by determining the completion of the curing reaction based on the variation amount of the measured fluorescence amount per unit time, the completion of the curing reaction can be determined with high accuracy, even if an absolute value of the measured fluorescence is fluctuated. Therefore, in a case of the same ultraviolet curing resin, a common threshold value can be used irrespective of its coating amount, thus making it possible to maintain high determination accuracy, even if there is a variation in an amount of the ultraviolet curing resin applied to a target workpiece.

Further, an irradiation time of the curing ultraviolet ray 54 can be optimized, and therefore, excessive irradiation of the curing ultraviolet ray 54 to the ultraviolet curing resin 12 can be suppressed. Thus, particularly, when a UV-lamp with relatively shorter lifetime and requiring a higher cost for the irradiation of the curing ultraviolet ray 54 is used, the cost per each workpiece can be suppressed and also the downtime of a line that occurs by replacing the UV-lamp can be suppressed.

Note that as described above, explanation has been given for the structure in which when the variation amount (difference value of the fluorescence amount) of the fluorescence amount per unit time is below the α2, "curing reaction completion" is immediately issued. However, the message of "curing reaction completion" may be issued at the point when a prescribed period is elapsed after the difference value of the fluorescence amount is below the threshold value α2.

### Processing 1 according to abnormality determination for the curing reaction

Further, as an example of the determination processing for the curing reaction state based on the time series behavior of the measured fluorescence, explanation will be given for the processing of determining abnormality of the curing reaction of the ultraviolet curing resin 12.

On an actual manufacturing line, there is a case that the curing reaction of the ultraviolet curing resin is not normally performed due to various factors. As one of the factors, deterioration of the ultraviolet curing resin is assumed. The ultraviolet curing resin is an anaerobic adhesive agent, and when the ultraviolet curing resin is left in an atmospheric air for a long time, oxygen and the photopolymerization initiator in the atmospheric air are bonded to each other, thus making it impossible to generate a sufficient amount of radical or cation even if the ultraviolet ray is received. In this case, a sufficient curing reaction does not occur by the ultraviolet curing resin.

In addition, as another factor, a large variation of an amount of the applied ultraviolet curing resin or deviation in an irradiation spot of the curing ultraviolet ray 54 is assumed. Further, as another factor, there is assumed a problem in which change of the amount and kind of the applied ultraviolet curing resin is not changed despite the change of the workpiece flowing on the manufacturing line.

Thus, it is important on an actual manufacturing line to find the abnormality of the curing reaction in the ultraviolet curing resin that can be generated due to various factors, and prevent a defect workpiece from being mixed therein. Therefore, determination is made on whether or not the curing reaction is abnormal based on whether or not a sufficient fluorescence amount is measured after a prescribed time is elapsed from the start of the irradiation of the curing ultraviolet ray 54. The explanation and example are given hereunder for the structure of determining whether or not the curing reaction is abnormal, by comparing the fluorescence amount measured after a prescribed time is elapsed from the start of the irradiation of the curing ultraviolet ray 54 and a prescribed threshold value.

The processing block according to abnormality determination of the curing reaction based on the fluorescence amount is the same as the processing block shown in Fig. 5. With reference to Fig. 5, the determination part 120A compares the measured fluorescence amount with a previously set threshold value α3 after determination time Ta is elapsed from the start of the irradiation of the curing ultraviolet ray 54, and when the measured fluorescence amount is below the threshold value α3, the message of "curing reaction abnormality" is issued. Note that when this message of "curing reaction abnormality" is issued, the irradiation end instruction is given to the light source part 202 from the curing reaction detector 100 (CPU 40), and the irradiation of the curing ultraviolet ray 54 is stopped. With the stop of the irradiation of the curing ultraviolet ray 54, the irradiation of the exciting ultraviolet ray 50 is also stopped. Further, the abnormality of the curing reaction is reported to the user and an external controller, etc, not shown.

The threshold value α3 is varied depending on the kind of the ultraviolet curing resin to be irradiated. Therefore, the threshold value α3 is previously experimentally obtained according to the kind of the ultraviolet curing resin, and is stored in the storage part 46 (Fig. 2), and when it is used, the user may select the threshold value α3 according to the ultraviolet curing resin to be irradiated.

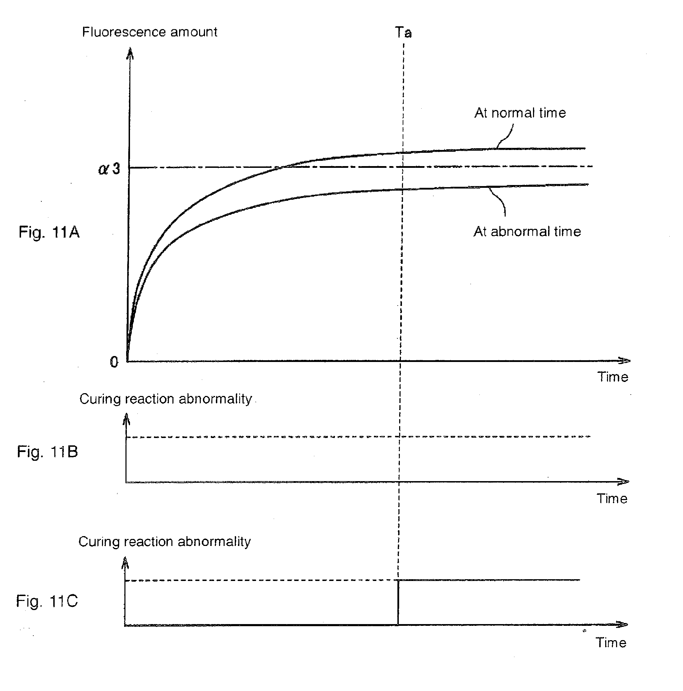

Fig. 11 is a time chart according to the abnormality determination based on the fluorescence amount. Fig. 11A shows the time series variation of the fluorescence amount measured, with the progress of the curing reaction for each case of a normal time and an abnormal time. Fig. 11B and Fig. 11C show an output variation of the "curing reaction abnormality" in each case of the normal time and the abnormal time. Note that the time axis of Fig. 11 is set with the irradiation start timing of the curing ultraviolet ray 54 as a reference.

With reference to Fig. 11A, for example, when the irradiation of the curing ultraviolet ray 54 is started, the measured fluorescence amount is monotonously increased in each case of the normal time and the abnormal time of the curing reaction. At the time point after the elapse of determination time Ta from the start of the irradiation of the curing ultraviolet ray 54, the fluorescence amount at the normal time exceeds the threshold value α3, but the fluorescence amount at the abnormal time is below the threshold value α3. Therefore, as shown in Fig. 11B, the message of "curing reaction abnormality" is not outputted at the normal time, and normality of the curing reaction is indirectly reported. Meanwhile, as shown in Fig. 11C, at the time point after the elapse of the determination time Ta, the message of "curing reaction abnormality" is outputted at the abnormal time, and generation of abnormality in the curing reaction is reported.

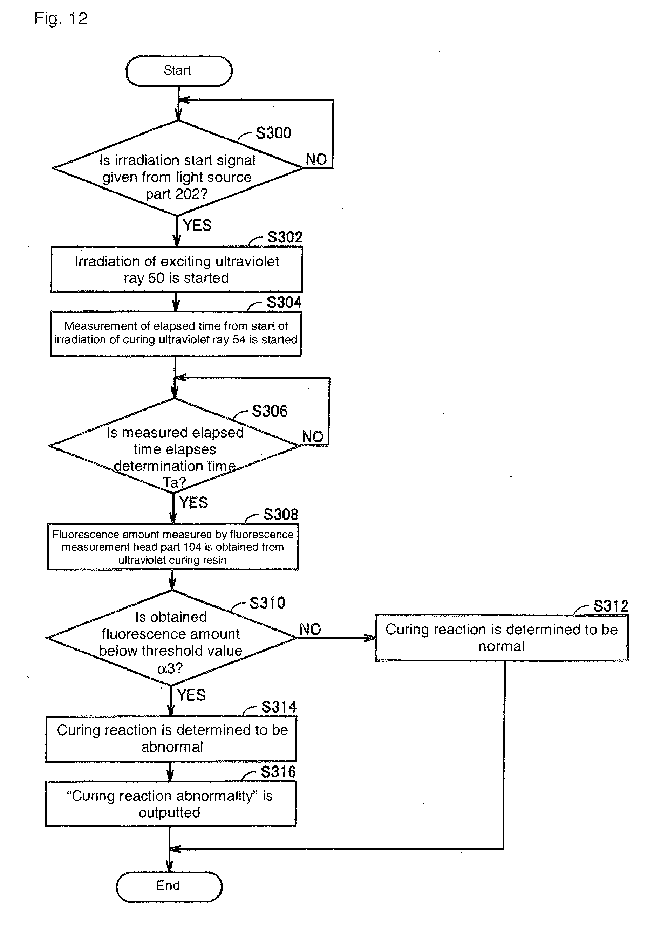

Fig. 12 is a flowchart according to abnormality determination of the curing reaction based on the fluorescence amount. The flowchart shown in this Fig. 12 is executed by the CPU 40 (Fig. 2) of the control part 102.

With reference to Fig. 12, first, determination is made on whether or not the irradiation start signal is given from the light source part 202 (step S300). Namely, determination is made on whether or not the irradiation of the curing ultraviolet ray 54 by the light source device 200 is started. Then, when the irradiation start signal is not given from the light source part 202 (NO in step S300), the processing is repeated until the irradiation start signal is given.

When the irradiation start signal is given from the light source part 202 (YES in step S300), the irradiation command is given to the fluorescence measurement head part 104 and the irradiation of the exciting ultraviolet ray 50 is started (step S302). Simultaneously, the measurement of the elapsed time from the start of the irradiation of the curing ultraviolet ray 54 is started (step S304). Then, determination is made on whether or not a measured elapsed time elapses the determination time Ta (step S306). When the measured elapsed time does not elapse the determination time Ta (NO in step S306), the processing is repeated until the determination time Ta is elapsed.

When the measured elapsed time elapses the determination time Ta (YES in step S306), the fluorescence amount measured by the fluorescence measurement head part 104 is obtained from the ultraviolet curing resin 12 (step S308). Note that in the obtaining processing of the fluorescence amount, the movement averaging processing is applied to the fluorescence amount obtained in time series.

Then, determination is made on whether or not the obtained fluorescence amount is below a threshold value α3 (step S310). When the obtained fluorescence amount is not below the threshold value α3 (NO in step S310), it is so determined that the curing reaction is normal (step S312). In this case, the message of "curing reaction abnormality" is not outputted. Then, the processing is ended.

Meanwhile, when the obtained fluorescence amount is below the threshold value α3 (YES in step S310), it is so determined that the curing reaction is abnormal (step S314), and the message of "curing reaction abnormality" is outputted (step S316). Then, the processing is ended.

Thus, based on the fluorescence amount at the time point after the elapse of the determination time Ta from the start of the irradiation of the curing ultraviolet ray 54, the generation of the abnormality of the curing reaction is determined and mix-in of the workpiece with insufficient curing reaction can be prevented.

### Processing 2 according to the abnormality determination of the curing reaction

Instead of the structure for determining abnormality generation of the curing reaction based on the fluorescence amount at the time point after the elapse of a prescribed determination time from the start of the irradiation of the curing ultraviolet ray 54 as described above, the structure of determining the abnormality generation of the curing reaction based on the variation amount (difference value or differentiated value) per unit time of the fluoresce amount at the time point after the elapse of the prescribed determination time may be adopted.

Out of the factors of not normally executing the curing reaction of the ultraviolet curing resin, particularly it is possible to determine the deviation of the distance from the irradiation head part 204 (Fig. 1) to the ultraviolet curing resin 12 and the deviation of the irradiation spot based on the progress speed of the curing reaction in the ultraviolet curing resin 12. Namely, when the irradiation head part 204 is disposed closer to the ultraviolet curing resin 12 than a position of the reference value, the irradiation intensity of the curing ultraviolet ray 54 irradiated onto the ultraviolet curing resin 12 is made larger than a defined value, thus allowing an excessive curing reaction to occur. Reversely, when the irradiation head part 204 is disposed set apart from the position of the reference value with respect to the ultraviolet curing resin 12, the irradiation intensity of the curing ultraviolet ray 54 irradiated onto the ultraviolet curing resin 12 is made smaller than the reference value, thus allowing an insufficient reaction of the curing reaction to occur. In a case of an excessive reaction, the color of the ultraviolet curing resin 12 is turned into black in a state of being scorched. Also, in a case of the insufficient reaction, the ultraviolet curing resin 12 is not sufficiently cured.

Thus, when the irradiation intensity of the curing ultraviolet ray 54 irradiated onto the ultraviolet curing resin 12 is largely different from the defined value, the progress speed of the curing reaction generated in the ultraviolet curing resin 12 is also largely different from the defined value. Therefore, based on the progress speed of the curing reaction, namely, whether or not the variation amount of the measured fluorescence amount per unit time is within a prescribed range, it is possible to determine whether or not the abnormality occurs in the curing reaction in the ultraviolet curing resin 12.

The processing block according to the abnormality determination of the curing reaction based on the variation amount of the fluorescence amount per unit time is the same as the processing block shown in Fig. 8. With reference to Fig. 8, a determination part 124A obtains the variation amount of the measured fluorescence amount per unit time from the time variation amount calculation part 122, at the time point after elapse of the determination time Tb from the start of the irradiation of the curing ultraviolet ray 54, and compares the obtained variation amount of the measured fluorescence amount per unit time with previously set threshold values α4 and α5. Note that the determination time Tb is set to be small, compared to the determination time Ta shown in the aforementioned Fig. 5 and Fig. 11. This is because an influence degree by the variation of the irradiation intensity of the curing ultraviolet ray 54 becomes relatively larger in an initial stage of the curing reaction.

Then, when the variation amount of the fluorescence amount per unit time is outside a range from the threshold value α4 to the threshold value α5, the "curing reaction abnormality" is issued. Note that when the "curing reaction abnormality" is issued, the irradiation end instruction is given to the light source part 202 from the curing reaction detector 100 (CPU 40), and the irradiation of the curing ultraviolet ray 54 is stopped. With the stop of the irradiation of the curing ultraviolet ray 54, the irradiation of the exciting ultraviolet ray 50 is also stopped. Further, the message such as the abnormality of the curing reaction is reported to a user and an external controller, etc (not shown).

The threshold values α4 and α5 are varied by the kind of the ultraviolet curing resin to be irradiated, and therefore the threshold values α4 and α5 are previously experimentally obtained according to the kind of the ultraviolet curing resin, which is then stored in the storage part 46 (Fig. 2), and when it is used, the user may select the threshold values α4 and α5 according to the ultraviolet curing resin to be irradiated.

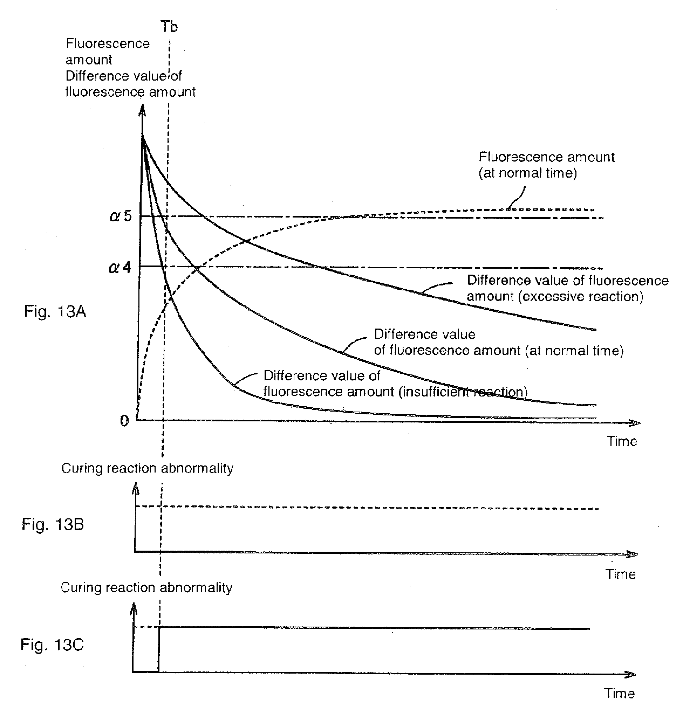

Fig. 13 is a time chart according to the abnormality determination of the curing reaction based on the variation amount of the measured fluorescence per unit time. Fig. 13A shows the time series variation of the fluorescence amount measured with the progress of the curing reaction at the normal time and the variation amount of the fluorescence amount per unit time, and the time series variation of the variation amount per unit time of the fluorescence amount measured at the abnormal time (excessive reaction and insufficient reaction). Fig. 13B and Fig. 13C show output variation of the "curing reaction abnormality" at the normal time and at the abnormal time, respectively. Note that the time axis of Fig. 11 is set with the irradiation start timing of the curing ultraviolet ray 54 as a reference.

With reference to Fig. 13A, for example, when the irradiation of the curing ultraviolet ray 54 is started, the measured fluorescence amount is monotonously increased. When the curing reaction is normal, the variation amount per unit time of the fluorescence amount at the time point after elapse of the determination time Tb from the start of the irradiation of the curing ultraviolet ray 54 exists within a range from the threshold value α4 to the threshold value α5.

Meanwhile, when the irradiation intensity of the curing ultraviolet ray 54 is strong, and the excessive reaction occurs (at the time of the reaction abnormality), the progress speed of the curing reaction is relatively fast, and therefore the variation amount per unit time of the fluorescence amount at the time point after elapse of the determination time Tb exceeds the threshold value α5. In addition, when the irradiation intensity of the curing ultraviolet ray 54 is weak and the insufficient reaction occurs (at the time of the reaction abnormality), the progress speed of the curing reaction is relatively slow, and therefore the variation amount per unit time of the fluorescence amount at the time point after elapse of the determination time Tb is below the threshold value α4.

Therefore, as shown in Fig. 13B, no "curing reaction abnormality" is outputted at the normal time, and normality of the curing reaction is indirectly reported. Meanwhile, as shown in Fig. 13C, at the abnormal time, the "curing reaction abnormality" is issued at the time point after elapse of the determination time Tb, and the abnormality generation is reported.

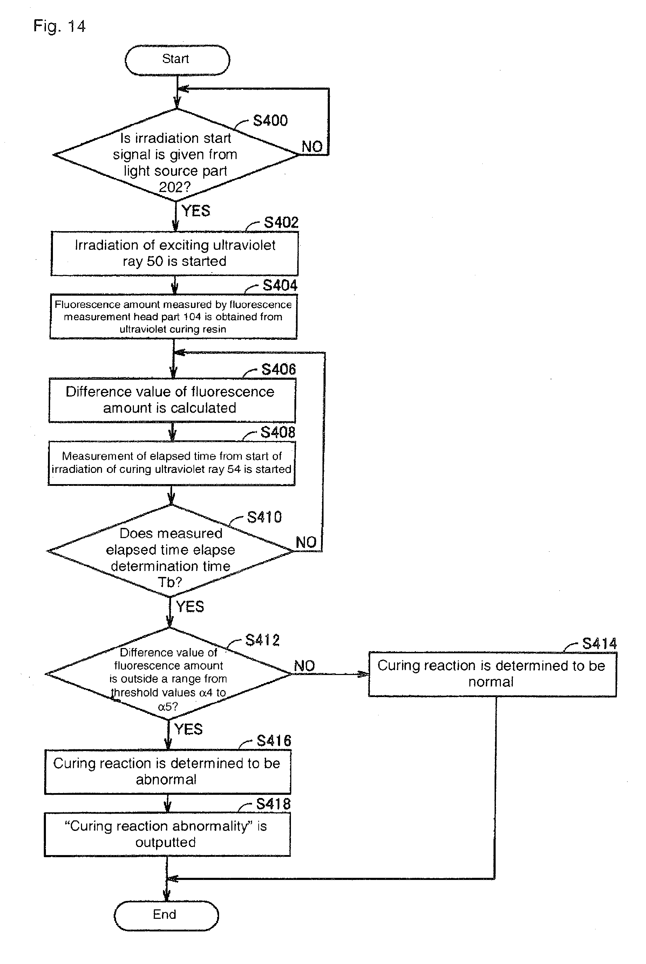

Fig. 14 is a flowchart according to the abnormality determination of the curing reaction based on the variation amount of the measured fluorescence amount per unit time. The flowchart shown in Fig. 14 is executed by the CPU 40 (Fig. 2) of the control part 102.

With reference to Fig. 14, first, determination is made on whether or not the irradiation start signal is given from the light source part 202 (step S400). Namely, determination is made on whether or not the irradiation of the curing ultraviolet ray 54 by the light source device 200 is started. Then, when the irradiation start signal is not given from the light source part 202 (NO in step S400), the processing is repeated until the irradiation start signal is given.

When the irradiation start signal is given from the light source part 202 (YES in step S400), the irradiation command is given to the fluorescence measurement head part 104 and the irradiation of the exciting ultraviolet ray 50 is started (step S402). Subsequently, the fluorescence amount measured by the fluorescence measurement head part 104 is obtained from the ultraviolet curing resin 12 (step S404). Note that in the obtaining processing of this fluorescence amount, the movement averaging processing is applied to the fluorescence amount obtained in time series. Further, based on the previously obtained fluorescence amount and the fluorescence amount obtained this time, the difference value of the fluorescence is calculated (step S406).

Simultaneously, the measurement of the elapsed time from the start of the irradiation of the curing ultraviolet ray 54 is started (step S408). Then, determination is made on whether or not the measured elapsed time elapses the determination time Tb (step S410). When the measured elapsed time does not elapse the determination time Tb (NO in step S410), the processing after step S406 is repeated until the elapse of the determination time Tb.

When the elapsed time elapses the determination time Tb(YES in step S410), determination is made on whether or not the difference value of the fluorescence amount at this time point is outside of the range from the threshold value α4 to the threshold value α5 (step S412). When the difference value of the fluorescence amount is not the outside of the range from the threshold value α4 to the threshold value α5 (NO in step S412), namely, when the difference value of the fluorescence amount is within a range from the threshold value α4 to the threshold value α5, it is so determined that the curing reaction is normal (step S414). In this case, the "curing reaction abnormality" is not issued. Then, the processing is ended.

Meanwhile, when the difference value of the fluorescence amount is outside of the range from the threshold value α4 to the threshold value α5 (YES in step S412), it is so determined that the curing reaction is abnormal (step S416), and the "curing reaction abnormality" is outputted (step S418). Then, the processing is ended.

Thus, based on the variation amount per unit time of the fluorescence amount at the time point after elapse of the determination time Tb from the start of the irradiation of the curing ultraviolet ray 54, the abnormality generation of the curing reaction is determined. Therefore, the excessive reaction or the mix-in of the workpiece with insufficient reaction can be prevented.

### Processing 3 according to the abnormality determination of the curing reaction

As is explained in the processing 1 and the processing 2 according to the abnormality determination of the curing reaction as described above, in addition to the structure of determining the abnormality generation of the curing reaction at a certain time point of the time series behavior of the measured fluorescence, an entire body of the time series behavior (time series profile) of the measured fluorescence is referenced and the normality of the curing reaction may be determined.

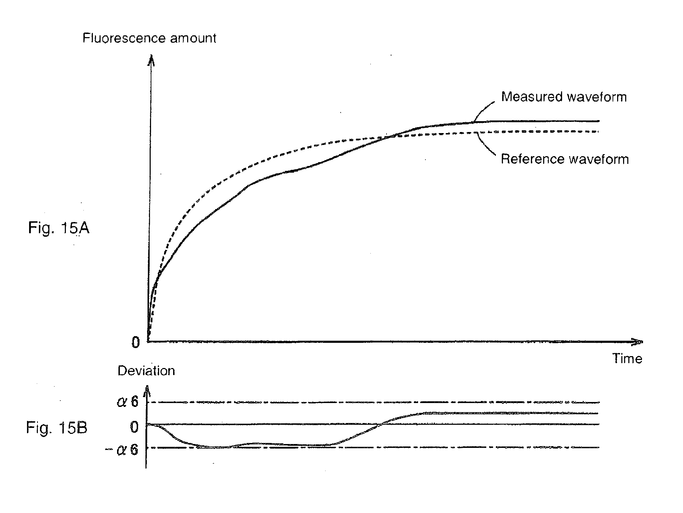

Fig. 15 is a time chart according to the abnormality determination of the curing reaction based on the entire body of the time series behavior of the measured fluorescence amount. Fig. 15A shows an example of a time series profile of a reference and the time series profile of the measured fluorescence. Fig. 15B shows an example of the time series variation of a deviation of the measured fluorescence from the time series profile of a reference.

With reference to Fig. 15A, based on the time series profile of the measured fluorescence in the past, the reference time series profile (described as a "reference profile" hereunder) of the fluorescence is previously stored in the storage part 46 (Fig. 2). Note that the reference profile is previously set by applying averaging processing to the time series profile of a plurality of fluoresce amounts measured under the same conditions. Further, this reference profile is varied depending on the kind of the ultraviolet curing resin, and therefore is preferably set depending on the kind of the ultraviolet curing resin.

The time series profile of the fluorescence amount measured in each processing is drawn on the same coordinate as this reference profile. Then, at each time point, the deviation between the fluorescence amount corresponding to the reference profile and the measured fluorescence is calculated. Then, FIG. 15B shows the time series behavior of the deviation thus calculated. Here, during a period when the ultraviolet curing resin 12 is in the curing reaction, when the calculated deviation of the fluorescence amount is maintained in a prescribed range (± threshold value a6), it is so determined that the curing reaction of the ultraviolet curing resin 12 is normal. Meanwhile, when the deviation of the fluorescence amount is outside the prescribed range, it is so determined that the curing reaction is abnormal.

Note that a screen such as shown in Fig. 15A and Fig. 15B is displayed on the display part 42 (Fig. 2) of the control part 102. Specifically, the CPU 40 (Fig. 2) of the control part 102 reads the data of the reference profile from the storage part 46, and gives a display command to the display part 42 for displaying a prescribed coordinate. Further, the CPU 40 gives the display command to the display part 42 so as to plot sequentially measured values of the fluorescence amount on this coordinate. Simultaneously, the CPU 40 calculates the deviation between the fluorescence amount corresponding to the reference profile and the measured fluorescence amount, and gives the display command to the display part 42 so as to sequentially plot the calculated data.

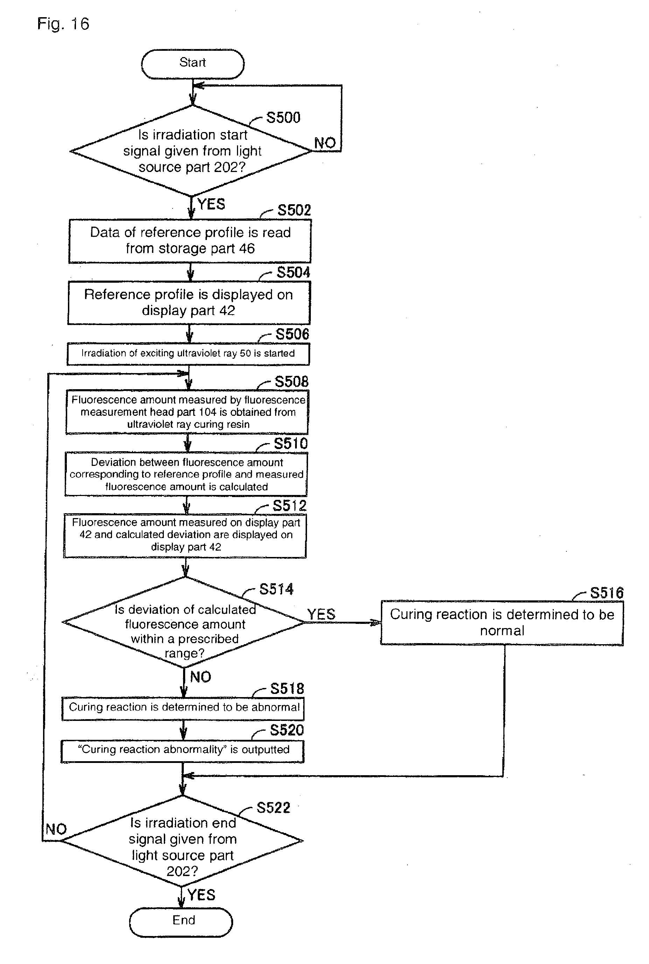

Fig. 16 is a flowchart according to the abnormality determination of the curing reaction based on the entire body of the time series behavior of the measured fluorescence amount. The flowchart shown in Fig. 16 is executed by the CPU 40 (Fig. 2) of the control part 102.

With reference to Fig. 16, determination is made on whether or not the irradiation start signal is given from the light source part 202 (step S500). Namely, determination is made on whether or not the irradiation of the curing ultraviolet ray 54 is started by the light source device 200. Then, when the irradiation start signal is not given from the light source part 202 (NO in step S500), the processing is repeated until the irradiation start signal is given.

When the irradiation start signal is given from the light source part 202 (YES in step S500), the data of the reference profile is read from the storage part 46 (step S502), and this reference profile is displayed on the display part 42 (step S504). Subsequently, the irradiation command is given to the fluorescence measurement head part 104 and the irradiation of the exciting ultraviolet ray 50 is started (step S506).

Subsequently, the fluorescence amount from the ultraviolet curing resin 12 measured by the fluorescence measurement head part 104 is obtained (step S508). Note that in the obtaining processing of this fluorescence amount, the movement averaging processing is applied to the fluorescence amount obtained in time series (step S510). Further, the deviation between the fluorescence amount corresponding to the reference profile and the measured fluorescence amount is calculated (step S510). Then, the measured fluorescence amount and the calculated deviation are displayed on the display part 42 (step S512).

Further, determination is made on whether or not the deviation of the calculated fluorescence amount is within a prescribed range (step S514). When the deviation of the fluorescence amount is within the prescribed range (YES in step S514), it is so determined that the curing reaction is normal (step S516). In this case, the "curing reaction abnormality" is not outputted.

Meanwhile, when the deviation of the fluorescence amount is not within the prescribed range (NO in step S514), namely, when the deviation of the fluorescence amount is outside of the prescribed range, it is so determined that the curing reaction is abnormal (step S518), and the "curing reaction abnormality" is outputted (step S520).

Subsequently, determination is made on whether or not the irradiation end signal is given from the light source part 202 (step S522). Namely, determination is made on whether or not the irradiation of the curing ultraviolet ray 54 by the light source device 200 is ended. Then, when the irradiation end signal is not given from the light source part 202 (NO in step S522), the processing after step S508 is repeated.

Meanwhile, when the irradiation end signal is given from the light source part 202 (YES in step S522), the processing is ended.

Note that in the aforementioned explanation, explanation is given for the structure in which the "curing reaction abnormality" is immediately issued, when the deviation between the fluorescence amount corresponding to the reference profile and the measured fluorescence amount is outside the prescribed range. However, it is also possible to adopt the structure in which "curing reaction completion" is issued when maintaining a state that the measured fluorescence amount is outside of the prescribed range for a prescribed period.

Thus, by determining the abnormality generation of the curing reaction based on the entire body of the time series behavior of the measured fluorescence amount, the excessive reaction or the mix-in of the workpiece with insufficient reaction can be prevented.

Note that as described above, explanation is given for the processing according to the abnormality determination of three kinds of curing reactions. However, all processing needs not necessarily be provided for the curing reaction detector 100, and the processing depending on the needs may be incorporated therein as needed.

### User interface

In order to report to a user a progressing state of the curing reaction of the ultraviolet curing resin 12, completion determining processing of the curing reaction as described above, and a result of abnormality determination processing, etc, each kind of data is displayed on the display part 42 (Fig. 2) of the control part 102. Note that a display state of the display part 42 is controlled by the display command from the CPU 40.

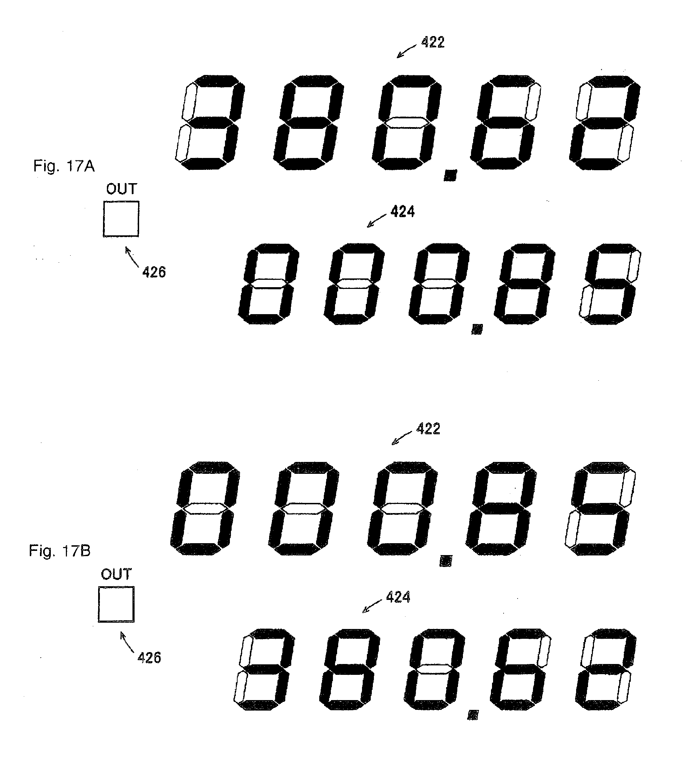

Fig. 17 is a view showing an example of a display content in the display part 42.
As shown in Fig. 17A, for example, the fluorescence amount measured with the progress of the curing reaction of the ultraviolet curing resin 12 and its variation amount per unit time are digit-displayed. The measured fluorescence amounts (an example displayed as "380.62" is shown in Fig. 17A) are sequentially displayed in a digit-display area 422 formed of 7 segment display parts of 5 digits. In addition, a digit-display area 424 is provided, which is formed of 7 segment display parts of 5 digits smaller than the seven segment display parts constituting the digit-display area 422. In this digit display-area 424, the variation amount of the measured fluorescence amount per unit time ("000.85" is displayed as an example in Fig. 17B) is sequentially displayed.

Further, a result display area 426 including LED, etc, is provided on the left side of the digit-display areas 422 and 424. A visual display of the result display area 426 is changed in accordance with a result of the completion determination processing and the abnormality determination processing of the curing reaction. As an example, when some sort of determination result is outputted, a no-lighting state is moved to a lighting state or a blinking state, or emission color is changed to "red" from "green".

As a more specific example, before start of the irradiation of the curing ultraviolet ray 54, the result display area 426 is maintained in the no-lighting state. Meanwhile, when the irradiation of the curing ultraviolet ray 54 is started, "red" is displayed in the result display area 426. Then, when it is so determined that the curing reaction in the ultraviolet curing resin is completed, "green" is displayed in the result display area 426. In addition, when it is so determined that the curing reaction in the ultraviolet curing resin is abnormal, the result display area 426 is set in the blinking state of "red".

Further, as shown in Fig. 17B, responding to an operation of the operation part 44 by a user, digit-displayed in the digit-display areas 422 and 424 may be alternately replaced. Namely, in Fig. 17B, the variation amount of the measured fluorescence amount per unit time is displayed in the digit-display area 422, thereby exemplifying a case of displaying the measured fluorescence amount in the digit-display area 424.

### Display of progress degree of the curing reaction

In addition to a user interface as shown in Fig. 17A and Fig. 17B, a progress degree of the curing reaction generated in the ultraviolet curing resin 12 is displayed in the curing reaction detector 100 according to this embodiment.

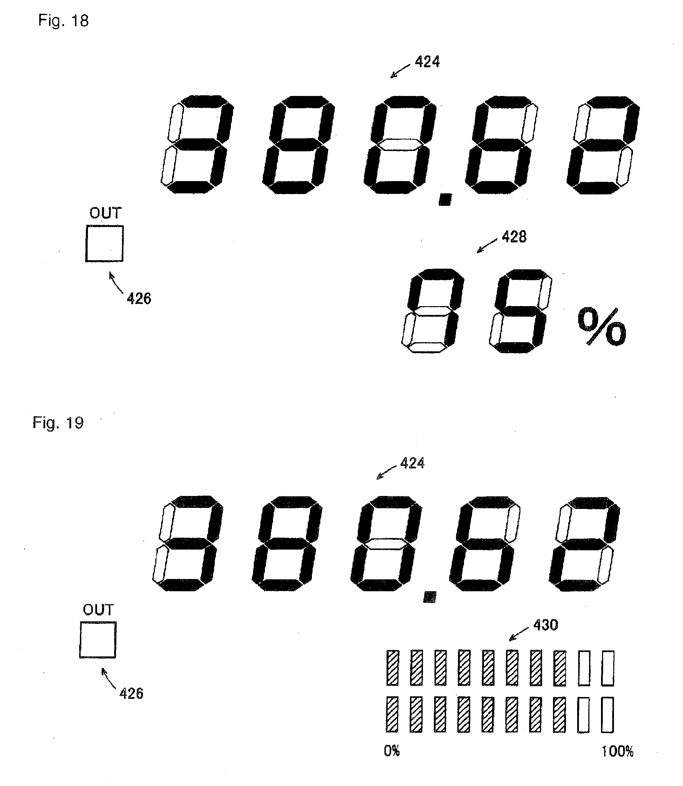

Fig. 18 is a view showing an example of the display of the progress degree of the curing reaction in the display part 42.
With reference to Fig. 18, in the display part 42, instead of the digit-display area 424 in Fig. 17A and Fig. 17B, the progress degree of the curing reaction is sequentially digit-displayed in the digit-display area 428 (Fig. 18 shows an example of displaying "75%").

Further, instead of such digit-display, an indicator display may be preferable.
Fig. 19 is a view showing another example of the progress degree display of the curing reaction in the display part 42.

With reference to Fig. 19, in the display part 42, instead of the digit-display area 428 in Fig. 18, the progress degree of the curing reaction is displayed in an indicator display area 430. For example, the indicator display area 430 is configured by indicators of 10 stages, and indicators of the number according to the progress degree of the curing reaction of the ultraviolet curing resin 12 are lighted.

Such a progress degree of the curing reaction is calculated based on a ratio of the measured fluorescence amount with respect to a reaction completed fluorescence amount, being the fluorescence amount regarded to complete the curing reaction. Specifically, the time series behavior (time series profile) of the measured fluorescence amount is stored in the storage part 46 (Fig. 2) as needed, and a time series profile to be the reference is previously decided based on a history of the time series profile thus stored. Note that this time series profile is changed depending on the kind of the ultraviolet curing resin, and therefore it is preferable to decide the time series profile according to the kind of the ultraviolet curing resin.

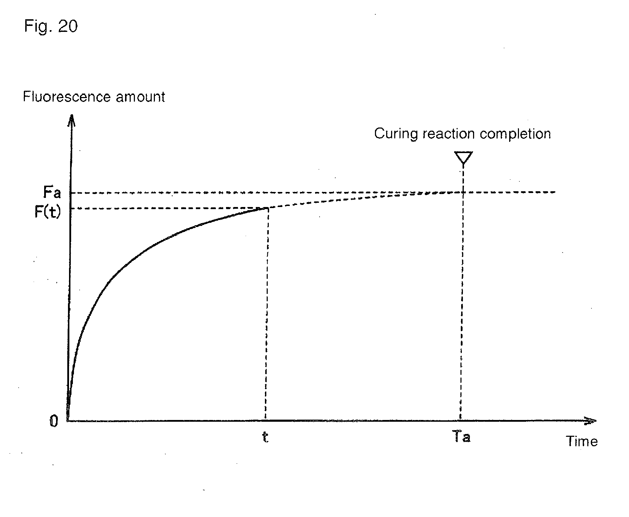

Fig. 20 is a view for explaining for the process for calculating the progress degree of the curing reaction. In Fig. 20, the time series profile to be the reference, and a time series transition of the actually measured fluorescence amount are shown in the same coordinate.

With reference to Fig. 20, a reaction completed fluorescence amount Fa, which is regarded as the completion of the curing reaction, is previously obtained based on the time serried profile to be the reference. Then, by dividing the fluorescence amount F(t) measured at each time point by this reaction completed fluorescence amount Fa, the progress degree of the curing reaction is calculated. Namely, the progress degree of the curing reaction = fluorescence amount F(t)/reaction completed fluorescence amount Fa is established. Accordingly, in the CPU 40, the reaction completed fluorescence amount Fa is previously set and the progress degree of the curing reaction as described above is calculated at a timing for measuring the fluorescence amount, and a display value of the display part 42 is updated.

Alternately, based on the reaction completion time Ta regarded as the completion of the curing reaction, the progress degree of the curing reaction may be calculated. Namely, the progress degree of the curing reaction can be calculated from the ratio of the elapsed time t in each curing reaction with respect to the reaction completion time Ta from the start of the irradiation of the curing ultraviolet ray 54 to the time point regarded as completion of the curing reaction. Namely, the progress degree of the curing reaction = elapsed time t/reaction completion time Ta is established. In this case, under the control of the CPU 40, the reaction completion time Ta is previously set and the progress degree of the curing reaction as described above is calculated at a timing for measuring accumulative time from the start of the irradiation of the curing ultraviolet ray 54, and a display value in the display part 42 is updated.

Although such a reaction completed fluorescence Fa or the reaction completion time Ta can be automatically calculated by averaging a plurality of time series profiles, it may be arbitrarily set by a user.

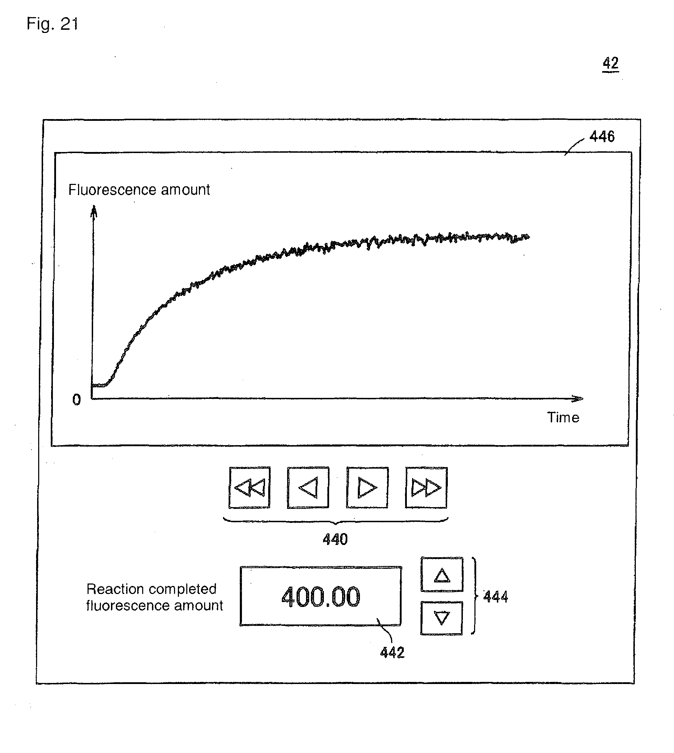

Fig. 21 shows a display example in the display part 42 when the reaction completion time Ta is set by the user.
With reference to Fig. 21, the display part 42 displays a selecting operation area 440 for arbitrarily selecting the time series profile of the fluorescence amount measured in the past by the user. By performing selective operation by the user for a prescribed button display of the selective operation area 440, using a touch pen, etc, selected time series profiles are sequentially displayed in a profile display area 446. At this time, under the control of the CPU 40, responding to the selective operation in the selective operation area 440, one data of the time series profiles of the fluorescence amount stored in the storage part 46 is read and displayed on the display part 42.

Further, while referring to the time series profile of the fluorescence amount displayed in the selective operation area 440, the user can change the reaction completed fluorescence amount Fa displayed in the digit-display area 442 by similarly operating a digit operation area 444. Thus, when the reaction completed fluorescence amount Fa is changed by the user, the CPU 40 calculates the progress degree of the curing reaction by using the reaction completed fluorescence amount after this change. Namely, the CPU 40 can change the reaction completed fluorescence amount according to an input value from outside.

Incidentally, the user using the ultraviolet irradiation apparatus 1 wears an eye protector for protecting eyes from UV-rays. Such an eye protector is a kind of an optical filter for intercepting light having the wavelength band corresponding to the UV-rays.

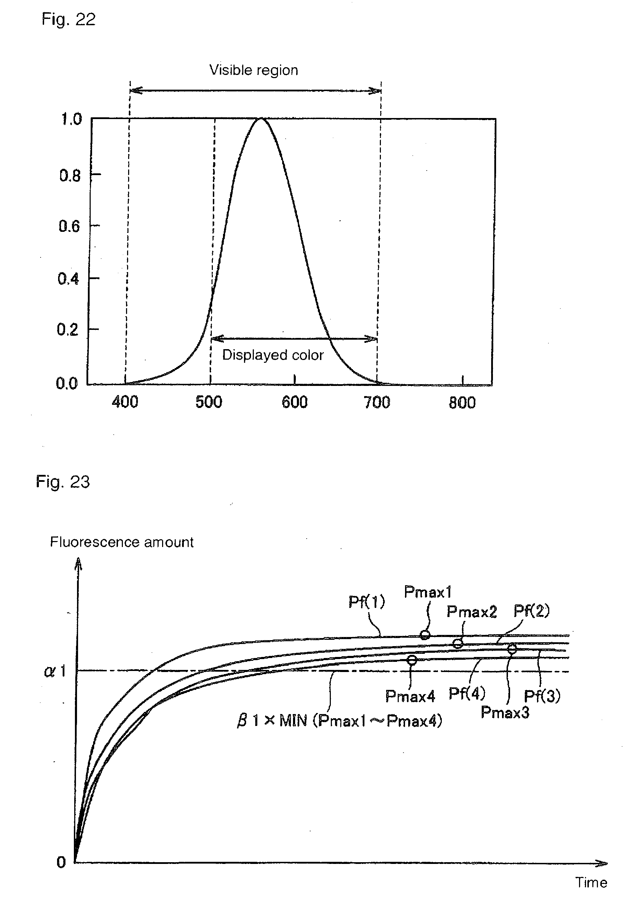

Fig. 22 is a view showing an example of visibility characteristics in a state of wearing the eye protector.
With reference to Fig. 22, wavelength interception characteristics of a plurality of eye protectors are relatively moderate. Therefore, in order to maintain more safety side, the eye protector is designed so that the light of the wavelength band including a part of a visible area is intercepted in addition to an UV-ray area. Therefore, it appears that the UV-ray area side of the visible area, namely violet color and blue color are hardly visible by the user wearing such an eye protector.

Therefore, the color having the wavelength band set apart by a prescribed length to a longer wavelength side from the wavelength band of the curing ultraviolet ray 54 and the exciting ultraviolet ray 50 is used for the display as shown in Fig. 17 to Fig. 19. Specifically, colors included in a wavelength range from about 500nm to 700nm as shown in Fig. 22, for example, "green color", "yellow color", and "red color", etc, are used.

### Threshold value setting 1

The threshold value used in the processing according to the completion determination of the curing reaction as described above is set with reference to the time series behavior of previously measured plurality of fluorescence amounts. However, if there is a mode capable of automatically setting such a threshold value, this is preferable from a user-friendly viewpoint. Such a mode is called a "threshold value setting mode" hereunder, and details of this mode will be explained. In this threshold value setting mode, a characteristic aspect of the measured fluorescence amount is grasped in the time series profile, and the threshold value is set based on the fluorescence amount at the time point when this characteristic aspect is generated.

Hereunder, as an example, explanation will be given for the structure of setting a threshold value α1 (Fig. 6) which is compared to the fluorescence amount measured for determining the completion of the curing reaction. However, the other threshold value can also be set in the same method. Note that in order to clarify a distinction from the threshold value setting mode as will be described later, the threshold value setting mode for this structure is particularly called a "first threshold value setting mode".

As an aspect of using the threshold value setting mode, a case of finding an optimal threshold value is assumed, in a case that either one of the ultraviolet curing resin and the workpiece is new. In this case, several samples are irradiated with the ultraviolet ray 54 experimentally, and the optimal threshold value is set from the fluorescence amount measured at that time. Note that such a workpiece is also called training.

Therefore, in the first threshold value setting mode, a plurality of ultraviolet curing resins 12 to be samples, (or workpiece on which it is applied) are sequentially carried on a manufacturing line, and each ultraviolet curing resin 12 is irradiated with the curing ultraviolet ray 54 and the fluorescence amount generated from each ultraviolet curing resin 12 is measured. Subsequently, based on the measurement result, the optimal threshold value is set.

More specifically, a maximum value of the fluorescence amount in each of the time series profiles of the measured fluorescence amount is calculated as a characteristic aspect, and a value obtained by multiplying a smallest value out of a plurality of calculated maximum values by a prescribed coefficient β1 is set as the threshold value α1. Note that a value smaller than "1 ", for example, "0.9" is used as the coefficient β1.

Fig. 23 is a view for explaining the processing in the first threshold value setting mode. In Fig. 23, as an example, time series profiles Pf(1) to Pf(4) of the fluorescence amount are shown on the same coordinate, which are measured when each of the four samples is irradiated with the curing ultraviolet ray 54 for a sufficiently long time. Note that an irradiation condition and a measurement condition are set to be same for each sample. Then, maximum fluorescence amounts Pmax1 to Pmax4 are respectively calculated for each of the time series profiles Pf(1) to Pf(4). The smallest value of the maximum fluorescence amounts Pmax1 to Pmax4 thus calculated is extracted (maximum fluorescence amount Pmax4 in case of Fig. 23), then the extracted maximum fluorescence amount Pmax4 is multiplied by the prescribed coefficient β1, and the threshold value α1 is decided.

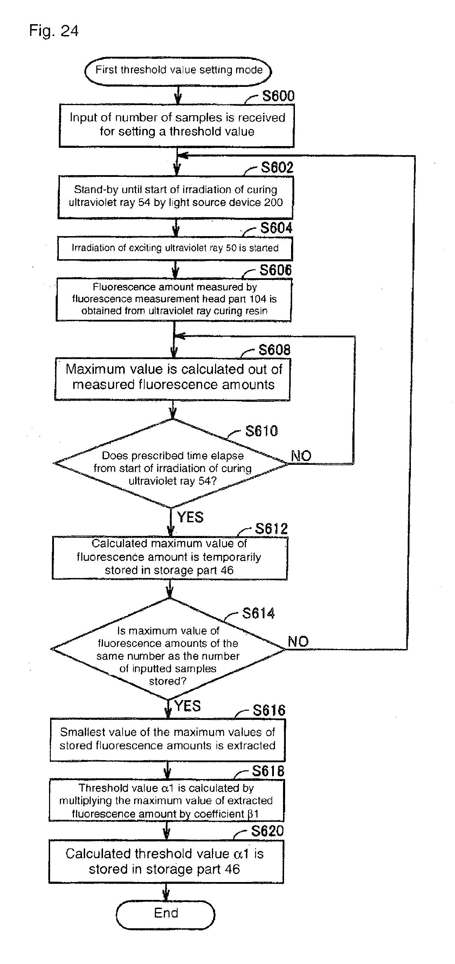

Fig. 24 is a flowchart showing the processing according to the first threshold value setting mode. This processing is started by operating the operation part 44 (Fig. 2) and selecting the first threshold value setting mode by the user.

With reference to Fig. 24, first, an input of the number of samples for setting a threshold value is received (step S600). The user inputs the number of samples used for operating the operation part 44 (Fig. 2) and setting the threshold value. Then, the start of the irradiation of the curing ultraviolet ray 54 by the light source device 200 is awaited (step S602). Note that the irradiation start of the curing ultraviolet ray 54 may be instructed by a signal from a sensor (not shown) for detecting a disposal of a sample at an irradiation spot of the curing ultraviolet ray 54, or the start of the irradiation may be instructed manually by the user.

When the irradiation of the curing ultraviolet ray 54 by the light source device 200 is started, an irradiation command is given to the fluorescence measurement head part 104 and the irradiation of the exciting ultraviolet ray 50 is started (step S604). Subsequently, the fluorescence amount from the ultraviolet ray curing resin 12 measured by the fluorescence measurement head part 104 is obtained (step S606). Note that in the obtaining processing of the fluorescence amount, the movement averaging processing is applied to the fluorescence amount obtained in time series.

Then, the maximum value of the measured fluorescence amounts is calculated (step S608). Specifically, in each measurement time, the measured fluorescence amount and the maximum value calculated before this time point are compared, and when the measured fluorescence amount is larger than this maximum value, the maximum value is updated to the measured fluorescence amount. Based on the fluorescence amount thus measured, the maximum value is updated as needed.

Then, determination is made on whether or not a prescribed time is elapsed from the start of the irradiation of the curing ultraviolet ray 54 (step S610). Note that the prescribed time is set to be a sufficient time for completing the curing reaction by the ultraviolet curing resin 12, and is previously set according to a coating amount of the ultraviolet curing resin.

When the prescribed time is not elapsed from the start of the irradiation of the curing ultraviolet ray 54 (NO in step S610), the processing of step S608 is repeated.

Meanwhile, when the prescribed time is elapsed from the start of the irradiation of the curing ultraviolet ray (YES in step S610), the calculated maximum value of the fluorescence amount is temporarily stored in the storage part 46 (step S612). Subsequently, determination is made on whether or not the maximum values of the fluorescence amounts of the same numbers as the numbers of samples inputted in step S600 are stored (step S614). When the maximum values of the fluorescence amounts of the same numbers as the numbers of samples are not stored (NO in step S614), the processing after step S602 is repeated.

When the maximum values of the fluorescence amounts of the same numbers as the numbers of samples are stored (YES in step S614), the smallest value of the stored maximum values of the fluorescence amounts is extracted (step S616), and the extracted maximum value of the fluorescence amounts is multiplied by the prescribed coefficient β1, and the threshold value α1 is thereby calculated (step S618). Further, the calculated threshold value α1 is stored in the storage part 46 (step S620), and the processing according to the first threshold value setting mode is ended.

By using such a "threshold value setting mode", even when there are a plurality of combinations of the ultraviolet curing resin and the workpiece, the optimal threshold value can be set relatively easily and quickly, thus making it possible to reduce the time required for setting the threshold value and suppress lowering of production efficiency.

### Threshold value setting 2

As another aspect of the threshold value setting mode, a "second threshold value setting mode" will be explained. In the second threshold value setting mode, the characteristic aspect is grasped from the variation amount of the measured fluorescence amount per unit time, and the threshold value α1 (Fig. 6) is set to compare it with the fluorescence amount measured for determining the completion of the curing reaction.

Similarly to the first threshold value setting mode, in the second threshold value setting mode also, a plurality of ultraviolet curing resins 12 (and the workpiece coated with the ultraviolet curing resin 12) to be the samples are sequentially carried to the manufacturing line, then each of the ultraviolet curing resins 12 is irradiated with the curing ultraviolet ray 54, and the fluorescence amount generated from each of the ultraviolet curing resins 12 is measured. Subsequently, the fluorescence amount corresponding to each of the ultraviolet curing resins 12 when the variation amount of the measured fluorescence amount per unit time is within a prescribed range is calculated. Here, the prescribed range is decided so as to include a state that an increase of the measured fluorescence amount is saturated, namely a state that the variation amount of the measured fluorescence amount per unit time is below the prescribed value. Further, the smallest value of the calculated plurality of fluorescence amounts is multiplied by the prescribed coefficient β2 and a value thus obtained is set to be the threshold value α1. Note that a value smaller than "1", for example "0.9" is used as the coefficient β2.

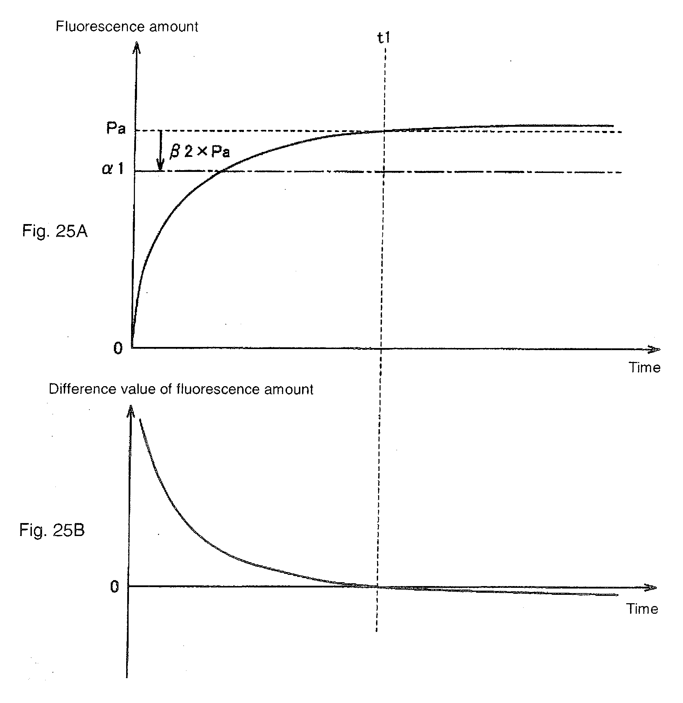

Fig. 25 is a view for explaining the processing in the second threshold value setting mode. Fig. 25A shows a time series variation of the measured fluorescence amount of one sample out of the plurality of samples, and Fig. 25B shows the time series variation (difference amount of the fluorescence amount) per unit time. In addition, Fig. 25 shows a case of using a condition that the variation amount of the measured fluorescence amount per unit time is "0" or less, namely a condition that a positive value is turned into a negative value.

With reference to Fig. 25A, when the irradiation of the curing ultraviolet ray 54 is started, the measured fluorescence amount is monotonously increased up to a prescribed amount, then is saturated and is turned into reduction. By such a time series behavior of the fluorescence amount, as shown in Fig. 25B, the difference value of the fluorescence amounts is turned into the negative value from the positive value after elapse of time t1 form the start of the irradiation of the curing ultraviolet ray 54. The fluorescence amount Pa is calculated, which is measured at the time point when the difference value of the fluorescence amounts is turned into the negative value from the positive value. Similarly, the fluorescence amount Pa is calculated in each time series profile, and the smallest value of the calculated fluorescence amount Pa is multiplied by the prescribed coefficient β2 and the threshold value α1 is decided.

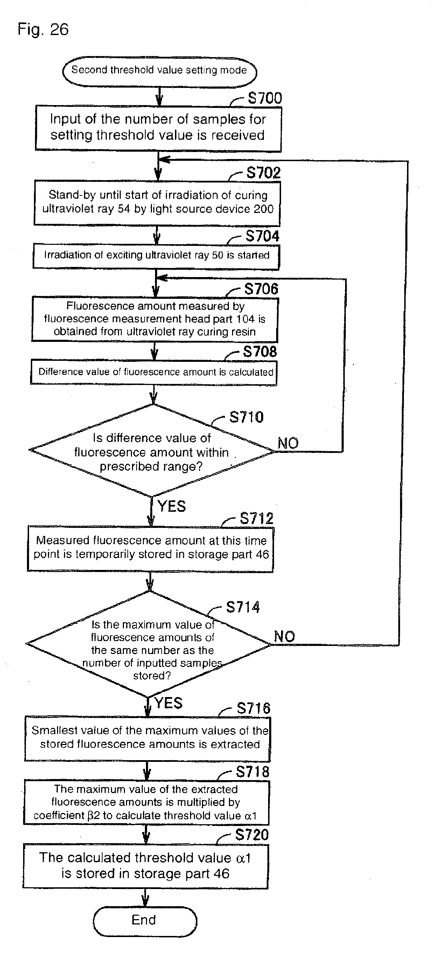

Fig. 26 is a flowchart showing the processing according to the second threshold value setting mode. This processing is started by operating the operation part 44 (Fig. 2) and selecting the second threshold value setting mode by the user.

With reference to Fig. 26, first, the input of the number of samples for setting the threshold value is received (step S700). The user operates the operation part 44 (Fig. 2) and inputs the number of samples used for setting the threshold value. Then, the start of the irradiation of the curing ultraviolet ray 54 by the light source device 200 is awaited (step S702). Note that the irradiation start of the curing ultraviolet ray 54 may be instructed by a signal from a sensor (not shown) for detecting a disposal of a sample at an irradiation spot of the curing ultraviolet ray 54, or the start of the irradiation may be instructed manually by the user.

When the irradiation start signal is started from the light source part 202, the irradiation command is given to the fluorescence measurement head part 104 and the irradiation of the exciting ultraviolet ray 50 is started (step S704). Subsequently, the fluorescence amount from the ultraviolet curing resin 12 measured by the fluorescence measurement head part 104 is obtained (step S706). Note that in the obtaining processing of this fluorescence amount, the movement averaging processing is applied to the fluorescence amount obtained in time series. Further, based on the previously obtained fluorescence amount and the fluorescence amount obtained this time, the difference value of the fluorescence amount is calculated (step S708).

Subsequently, determination is made on whether or not the difference value of the fluorescence amount is within a prescribed range (step S710). As an example, determination is made on whether or not the difference value of the fluorescence value is turned into the negative value from the positive value.

When the difference value of the fluorescence amount is not within the prescribed range (NO in step S710), the processing after step S706 is repeated.

Meanwhile, when the difference value of the fluorescence amount is within the prescribed range (YES in step S710), the fluorescence amount measured at this time point is temporarily stored in the storage part 46 (step S712). Subsequently, determination is made on whether or not the maximum value of the fluorescence amounts of the same numbers as the numbers of samples inputted in step S700 is stored (step S714). When the maximum value of the fluorescence amounts of the same number as the number of samples is not stored (NO in step S714), the processing after step S702 is repeated.

When the maximum value of the fluorescence amounts of the same numbers of the numbers of samples is stored (YES in step S714), the smallest value of the stored fluorescence amounts is extracted (step S716), and the maximum value of the extracted fluorescence amount is multiplied by the prescribed coefficient β2 and the threshold value α1 is calculated (step S718). Further, the calculated threshold value α1 is stored in the storage part 46 (step S720), and the processing according to the second threshold value setting mode is ended.

In addition, as a condition for grasping the characteristic aspect from the deviation amount of the measured fluorescence amount per unit time, a deflection point of the difference value of the fluorescence amount may be used.

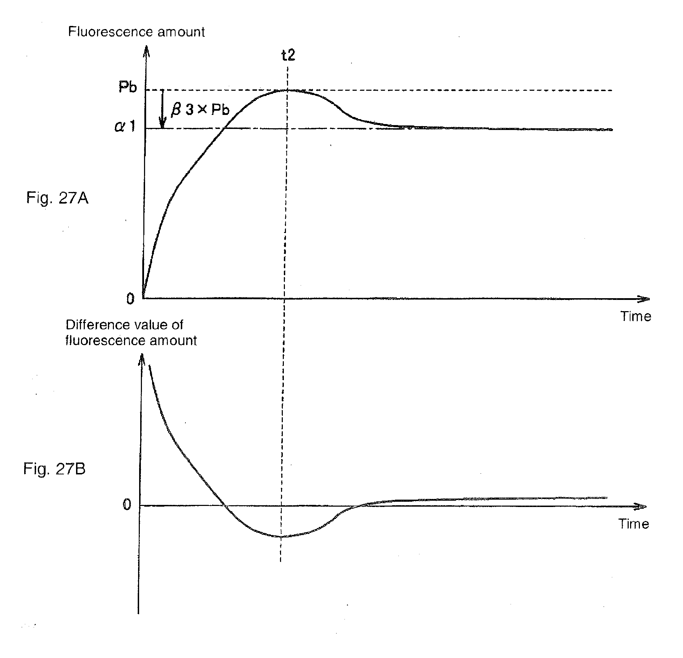

Fig. 27 is a view for explaining another aspect of the processing in the second threshold value setting mode. Fig. 27A shows the time series variation of the fluorescence amount measured for one of the plurality of samples, and Fig. 27B shows the time series variation of the variation amount of the measured fluorescence amount per unit time (difference value of the fluorescence amount).

With reference to Fig. 27B, the time point when the difference value of the fluorescence amount is turned into increase from reduction (after elapse of time t2 from the start of the irradiation of the curing ultraviolet ray 54) is grasped as a characteristic point, and the threshold value α1 may be set based on the fluorescence amount Pb (Fig. 27A) measured at this time. Namely, by focusing on the deflection point of the difference value of the fluorescence amount, the fluorescence amount Pb for setting the threshold value α1 is calculated.

Note that the processing after calculating the fluorescence amount Pb is the same as the aforementioned flowchart shown in Fig. 26, excluding a point of multiplying by the coefficient β3 instead of the coefficient β2, and therefore detailed explanation therefore is not repeated.

By using such a "threshold value setting mode", even when there are a plurality of combinations of the ultraviolet curing resin and the workpiece, the threshold value can be relatively easily and quickly set, thus making it possible to reduce the time required for setting the threshold value and the lowering of the production efficiency can be suppressed.

### Setting of the threshold value 3

In the aforementioned first and second threshold value setting modes, explanation is given for the structure of setting the threshold value α1 (Fig. 6) compared to the fluorescence amount measured for determining the completion of the curing reaction. However, explanation will be given for a third threshold value setting mode for setting a threshold value α3 (Fig. 11) compared to the fluorescence amount measured after elapse of the determination time Ta after the start of the irradiation of the curing ultraviolet ray 54.

In the same way as the first threshold value setting mode, in the third threshold value setting mode also, a plurality of ultraviolet curing resins 12 to be the samples (and the workpiece coated with the ultraviolet curing resin 12) are sequentially carried on the manufacturing line, then each of the ultraviolet curing resins 12 is irradiated with the curing ultraviolet ray 54 and the fluorescence amount generated from each ultraviolet curing resin 12 is measured. Then, the fluorescence amount is calculated, at the time point when the determination time Ta is elapsed from the start of the irradiation of the curing ultraviolet ray 54. Further, the smallest value of the calculated plurality of fluorescence amounts is multiplied by a prescribed coefficient β4 to set it as the threshold value α3. Note that a value smaller than "1 ", for example "0.9" is used as the coefficient β4.

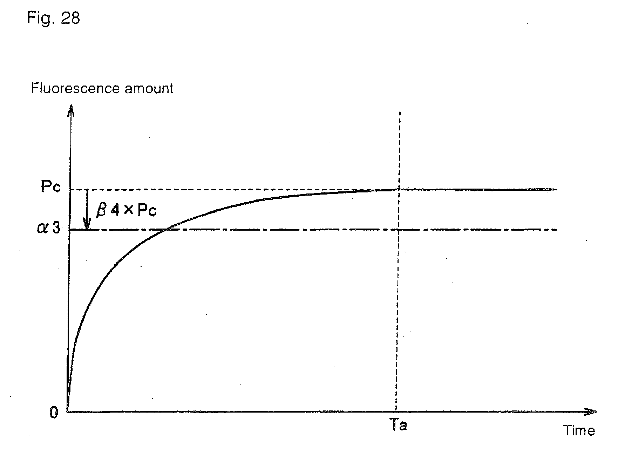

Fig. 28 is a view for explaining the processing in the third threshold value setting mode. Fig. 28 shows the time series variation of the measured fluorescence amount of one of the plurality of samples.

With reference to Fig. 28, when the irradiation of the curing ultraviolet ray 54 is started, the measured fluorescence amount is monotonously increased. Then, the fluorescence amount Pc at the time point after elapse of the determination time Ta from the start of the irradiation of the curing ultraviolet ray 54 is calculated. Similarly, the fluorescence amount Pc in each time series profile is calculated, and the smallest value of the calculated fluorescence value pc is multiplied by the prescribed coefficient β4 and the threshold value α3 is decided.

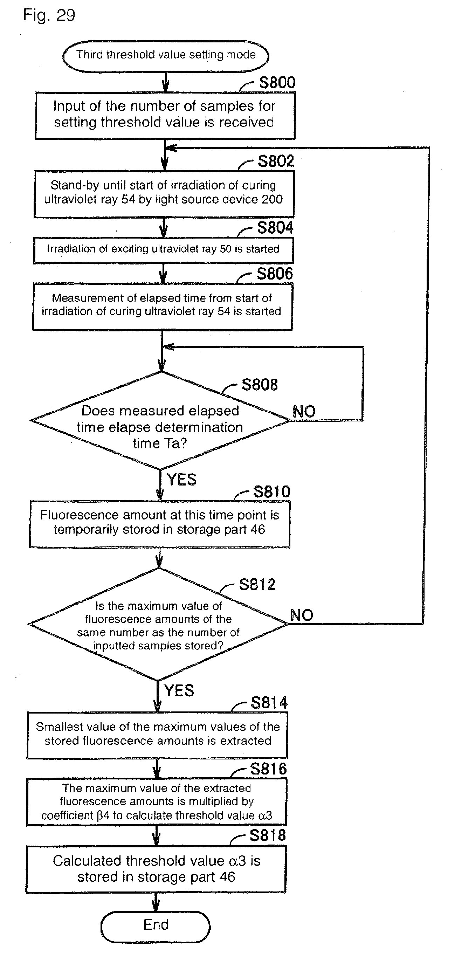

Fig. 29 is a flowchart showing the processing according to the third threshold value setting mode. The processing in this case is started by operating the operation part 44 (Fig. 2) and selecting the third threshold value setting mode by the user.

With reference to Fig. 29, first, the input of the number of samples for setting the threshold value is received (step S800). The user operates the operation part 44 (Fig. 2) and inputs the number of samples used for setting the threshold value. Then, the start of the irradiation of the curing ultraviolet ray 54 by the light source device 200 is awaited (step S802). Note that the irradiation start of the curing ultraviolet ray 54 may be instructed by a signal from a sensor (not shown) for detecting the disposal of a sample at an irradiation spot of the curing ultraviolet ray 54, or the start of the irradiation may be instructed manually by the user.

When the irradiation start signal is started from the light source part 202, the irradiation command is given to the fluorescence measurement head part 104 and the irradiation of the exciting ultraviolet ray 50 is started (step S804). At the same time, measurement of the elapsed time from the start of the irradiation of the curing ultraviolet ray 54 is started (step S806). Then, determination is made on whether or not a measured elapsed time elapses the determination time Ta (step S808). When the measured elapsed time does not elapse the determination time Ta (NO in step S808), the processing is repeated until the determination time Ta is elapsed.

When the elapsed time elapses the determination time Ta (YES in step S808), the fluorescence amount measured at this time point is temporarily stored in the storage part 46 (step S10). Subsequently, determination is made on whether or not the maximum value of the fluorescence amounts of the same number as the number of samples inputted in step S800 are stored (step S812). When the maximum value of the fluorescence amounts of the same number as the number of samples is not stored (NO in step S812), the processing after step S802 is repeated.

When the fluorescence amount of the same number as the number of samples is stored (YES in step S812), the smallest value of the fluorescence amounts thus stored is extracted (step S814), and the maximum value of the extracted fluorescence amounts is multiplied by the prescribed coefficient β4 and the threshold value α3 is calculated (step S816). Further, the calculated threshold value α3 is stored in the storage part 46 (step S818), and the processing according to the third threshold value setting mode is ended.

By using such a "threshold value setting mode", even when there are a plurality of combinations of the ultraviolet curing resin and the workpiece, the threshold value can be relatively easily and quickly set, thus making it possible to reduce the time required for setting the threshold value and the lowering of the production efficiency can be suppressed.

Note that explanation is given for the processing according to three kinds of threshold value setting modes. However, all processing needs not necessarily be provided for the curing reaction detector 100, and the processing depending on the needs may be incorporated therein as needed.

In this embodiment, the curing ultraviolet ray 54 corresponds to the "first ultraviolet ray", and the exciting ultraviolet ray 50 corresponds to the "second ultraviolet ray". Then, the fluorescence measurement head part 104 realizes an "irradiation part", the fluorescence measurement head part 104 and the CPU 40 realize a "measurement part", a CPU 40 realizes a "determination part", the CPU 40 and the display part 42 realize a "first displaying part" and a "second displaying part", and the CPU 40 and the storage part 46 realize a "threshold value setting means".

According to this embodiment, when the ultraviolet curing resin receives the curing ultraviolet ray and allows the curing reaction to occur, the exciting ultraviolet ray is irradiated to measure the fluorescence amount emitted from the photopolymerization initiator of the ultraviolet curing resin. This fluorescence amount has a corresponding relation with a curing reaction state of the ultraviolet curing resin, and therefore based on the time series behavior of this fluorescence amount, the curing reaction state can be determined in real time.

Based on the curing reaction state that can be determined in real time, a completion timing of the curing reaction can be accurately grasped, thus making it possible to optimize the irradiation time of the curing ultraviolet ray and it is possible to suppress the generation of a defect product that occurs due to the excessive or insufficient curing reaction.

The normality of the curing reaction of the ultraviolet curing resin can be checked, thus making it possible to detect the abnormality of the curing reaction that occurs due to various factors and prevent the mix-in of the defect product.

### Second Embodiment

In the aforementioned first embodiment of the present invention, explanation is given for the ultraviolet irradiation apparatus 1 in which the curing reaction detector 100 and the light source device 200 are disposed so as to be mutually separated from one another. However, functions of the curing reaction detector 100 and the light source device 200 may be integrally formed.

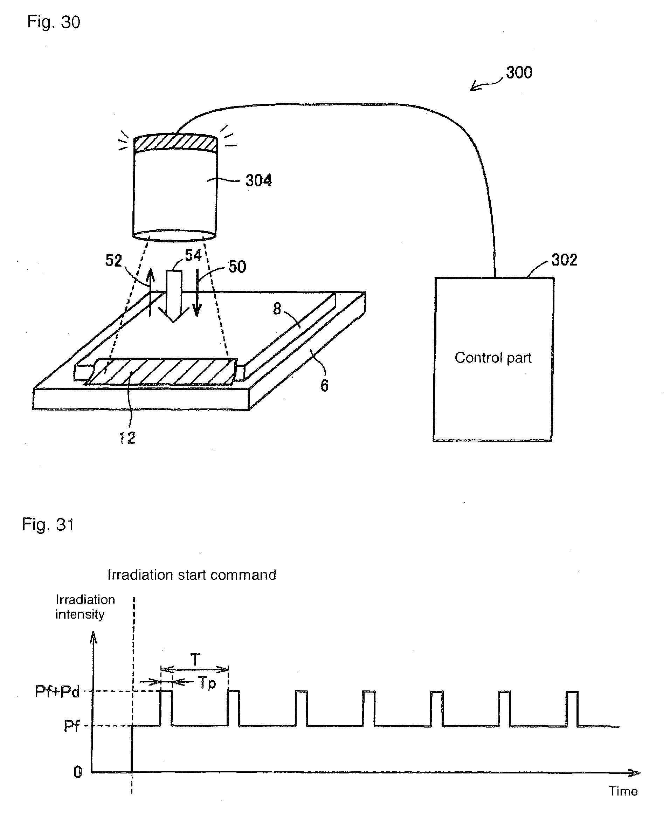

Fig. 30 is a schematic block diagram of a curing reaction detector 300 according to a second embodiment of the present invention.

With reference to Fig. 30, the curing reaction detector 300 according to a second embodiment of the present invention has a function corresponding to a function of the light source device 200, which is built in the curing reaction detector 100 according to the first embodiment of the present invention. Namely, the curing reaction detector 300 includes a head part 304 and a control part 302, wherein the head part 304 generates the curing ultraviolet ray 54 and the exciting ultraviolet ray 50, receives the fluorescence 52 irradiated from the ultraviolet curing resin 12, and outputs a detected signal showing the fluorescence amount to the control part 302. In addition, the control part 302 has a function corresponding to a function of the light source part 202, built in the control part 102 according to the first embodiment.

Note that in order to more simplify the head part 304, the curing ultraviolet ray 54 and the exciting ultraviolet ray 50 may be generated by using a common ultraviolet ray generating mechanism (such as an ultraviolet ray LED). When the common ultraviolet ray generating mechanism is used, it is preferable to generate the UV-ray having irradiation intensity such as synthesizing a direct current (DC) component that acts as the curing ultraviolet ray 54 and a pulse component that acts as the exciting ultraviolet ray 50.

Fig. 31 is a view showing the time series variation of the irradiation intensity when the common ultraviolet ray generating mechanism is used.

With reference to Fig. 31, when the head part 304 is constituted by using the common ultraviolet ray generating mechanism, the irradiation intensity is controlled so as to have the time series variation obtained by synthesizing the irradiation intensity respectively shown in Fig. 4A and Fig. 4B.

The other structure has the same content explained in the aforementioned first embodiment of the present invention, and therefore detailed explanation therefore is not repeated.

According to this embodiment, the curing ultraviolet ray and the exciting ultraviolet ray can be generated in a common head part. Therefore, the structure as an entire body of the apparatus can be simplified, which is advantageous in terms of a cost and a required space.

The embodiments disclosed this time is shown for examples in all points and should not be regarded as restricting the present invention. The scope of the present invention is not shown by the aforementioned explanation but is shown by the scope of claims and it is so intended that all modifications are included within the scope of the claims and within the scope of equivalent meaning to the scope of the claims.

## Claims

1. A curing reaction detector for detecting a curing reaction generated when a first ultraviolet ray is received by an ultraviolet curing resin containing a primary agent composed of at least one of monomer and oligomer and a photopolymerization initiator, the curing reaction detector comprising:
an irradiation part that irradiates a second ultraviolet ray for activating the ultraviolet curing resin;
a measurement part that receives the second ultraviolet ray irradiated by the irradiation part to measure a fluorescence amount emitted from the photopolymerization initiator; and
a determination part that determines a curing reaction state of the ultraviolet curing resin based on a time series behavior of the measured fluorescence amount by the measurement part.

2. The curing reaction detector according to claim 1, wherein the determination part determines that the curing reaction has completed when the measured fluorescence amount exceeds a prescribed threshold value.

3. The curing reaction detector according to claim 1, wherein the determination part determines that the curing reaction has completed when a variation amount of the measured fluorescence amount per unit time is below a prescribed threshold value.

4. The curing reaction detector according to claim 2 or 3, wherein the determination part gives an instruction to end the irradiation of the first ultraviolet ray when the completion of the curing reaction is determined.

5. The curing reaction detector according to any of claims 1 to 4, wherein the determination part determines the curing reaction as abnormal when the measured fluorescence amount is below a prescribed threshold value, after elapse of a prescribed time from the start of irradiation of the first ultraviolet ray.

6. The curing reaction detector according to any of claims 1 to 4, wherein the determination part determines the curing reaction as abnormal when a variation amount of the measured fluorescence amount per unit time is outside of a prescribed range after elapse of a prescribed time from the start of irradiation of the first ultraviolet ray.

7. The curing reaction detector according to any of claims 1 to 4, wherein the determination part compares the time series behavior with a time series behavior of a previously defined reference to determine whether the curing reaction from the measured fluorescence amount is normal.

8. The curing reaction detector according to claim 7, further comprising a first display part for displaying the time series behavior of the reference and the time series behavior of the measured fluorescence amount on the same coordinates.

9. The curing reaction detector according to claim 8, wherein the first display part further displays the time series behavior of the deviation of the measured fluorescence amount from the time series behavior of the reference.

10. The curing reaction detector according to any one of claims 1 to 9, further comprising a second display part for displaying a progress degree of the curing reaction of the ultraviolet curing resin attained by the first ultraviolet ray.

11. The curing reaction detector according to claim 10, wherein the second display part calculates the progress degree of the curing reaction based on a ratio of the measured fluorescence amount with respect to a reaction completed fluorescence amount, which is a fluorescence amount for which the curing reaction is regarded as completed.

12. The curing reaction detector according to claim 10 or 11, wherein the second display part displays the progress degree of the curing reaction numerically.

13. The curing reaction detector according to claim 10 or 11, wherein the second display part displays the progress degree of the curing reaction by indicators.

14. The curing reaction detector according to any one of claims 10 to 13, wherein the second display part displays the progress degree of the curing reaction using a color within a wavelength band whose wavelength is at least a predetermined length longer than the wavelength bands of the first and second ultraviolet rays.

15. The curing reaction detector according to any of claims 1 to 14, further comprising:
a threshold value setting part that sets a prescribed threshold value used for determining the completion of the curing reaction based on a time series behavior of the measured fluorescence amount.

16. The curing reaction detector according to any of claims 1 to 15, further comprising:
a threshold value setting part that sets a prescribed threshold value used for determining the completion of the curing reaction based on a fluorescence amount at a time point when a prescribed characteristic aspect is generated in the time series behavior of the measured fluorescence amount.

17. The curing reaction detector according to any of claims 1 to 16, further comprising:
a threshold value setting part that sets a prescribed threshold value used for determining a completion of the curing reaction based on the fluorescence amount at the time point when a prescribed time has elapsed from the start of the irradiation of the first ultraviolet ray in a time series behavior of a measured fluorescence amount.

18. The curing reaction detector according to any one of claims 1 to 17, further comprising:
a visual notice part that visually informs a user about the irradiation of the second ultraviolet ray during a period when the second ultraviolet ray is irradiated by the irradiation part.

19. The curing reaction detector according to any one of claims 1 to 18, further comprising:
a light source part that generates the first ultraviolet ray.

20. An ultraviolet ray irradiation apparatus for curing an ultraviolet curing resin containing a primary agent composed of at least one of a monomer and an oligomer, and a photopolymerization initiator, the apparatus comprising:
a light source device that irradiates a first ultraviolet ray for promoting a curing reaction of the ultraviolet curing resin; and
a curing reaction detector according to any of claims 1 to 19.

21. The ultraviolet irradiation apparatus according to claim 20, wherein the curing reaction detector starts irradiation of the second ultraviolet ray and measurement of the fluorescence amount when irradiation of the first ultraviolet ray is started from the light source device, and ends the irradiation of the second ultraviolet ray and the measurement of the fluorescence amount when the irradiation of the first ultraviolet ray from the light source device is ended.

22. The ultraviolet ray irradiation apparatus according to claim 20 or 21, wherein the determination part gives an instruction to end the irradiation of the first ultraviolet ray to the light source device when the measured fluorescence amount exceeds a prescribed threshold value.

23. The ultraviolet ray irradiation apparatus according to claim 20 or 21, wherein the determination part gives an instruction to end the irradiation of the first ultraviolet ray to the light source device when a variation amount of the measured fluorescence amount per unit time is below a prescribed threshold value.

24. The ultraviolet ray irradiation apparatus according to any one of claims 20 to 23, wherein
the light source device irradiates the first ultraviolet ray, which has an intensity that is approximately constant over time;
the irradiation part irradiates the second ultraviolet ray with an intensity that varies periodically;
the measurement part extracts from the measured fluorescence amount the fluorescence amount emitted from the photopolymerization initiator based on a periodic component corresponding to an intensity variation period of the second ultraviolet ray irradiated by the irradiation part.

25. A method for curing an ultraviolet curing resin using an ultraviolet ray irradiation apparatus, the ultraviolet curing resin containing a primary agent composed of at least one of monomer and oligomer, and a photopolymerization initiator,
the ultraviolet ray irradiation apparatus comprising a light source device and a curing reaction detector, and
the method comprising the steps of:
irradiating a first ultraviolet ray from the light source device for curing the ultraviolet curing resin;
irradiating a second ultraviolet ray from the curing reaction detector for activating the ultraviolet curing resin;
receiving the second ultraviolet ray to measure a fluorescence amount emitted from the photopolymerization initiator;
determining a curing reaction state of the ultraviolet curing resin based on a time series behavior of a measured fluorescence amount; and
controlling irradiation of the first ultraviolet ray based on the determined curing reaction state.
